(19)

**Europäisches Patentamt**

**European Patent Office**

**Office européen des brevets**

(11) **EP 4 685 496 A2**

(12) **EUROPEAN PATENT APPLICATION**

(43) Date of publication:
28.01.2026 Bulletin 2026/05

(21) Application number: 25222375.5

(22) Date of filing: 21.11.2024

(51) International Patent Classification (IPC):
*G01N 35/10* (2006.01)

(52) Cooperative Patent Classification (CPC):
**G01N 35/1011;** G01N 2035/1027; G01N 2035/1076

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.12.2023 JP 2023210611**

(62) Document number(s) of the earlier application(s) in accordance with Art. 76 EPC:
**24214479.8 / 4 571 322**

(71) Applicant: **Jeol Ltd.**
**Akishima, Tokyo 196-8558 (JP)**

(72) Inventor: **NAKAMURA, Mizuki**
**Akishima-shi, 196-8558 (JP)**

(74) Representative: **Boult Wade Tennant LLP**
**Salisbury Square House**
**8 Salisbury Square**
**London EC4Y 8AP (GB)**

Remarks:
This application was filed on 10-12-2025 as a divisional application to the application mentioned under INID code 62.

(54) **DISPENSING PROBE DEVICE AND AUTOMATIC ANALYSIS DEVICE**

(57) To provide a dispensing probe device (23) and an automatic analysis device capable of suppressing a decrease in the number of dispensing actions processed within a certain period of time.

A first drive mechanism of a dispensing probe device (23) moves a first support arm (114) in a vertical direction and rotates the first support arm (114) in a horizontal direction. The second drive mechanism moves a second support arm (124) in the vertical direction and rotates the second support arm (124) in the horizontal direction. A distance from a rotation center of the first support arm (114) to a second dispensing probe (23B) in the horizontal direction is longer than a distance from a rotation center of the second support arm (124) to the second dispensing probe (23B) in the horizontal direction. A fan shape having an arc formed by a trajectory of one end of the second support arm (124) that is far from the rotation center of the second support arm (124) is included in a fan shape having an arc formed by a trajectory of the second dispensing probe (23B).

EP 4 685 496 A2

**Description**

BACKGROUND

Technical Field

The present invention relates to a dispensing probe device and an automatic analysis device.

Related Art

An automatic analysis device is used for tests in various fields such as biochemical tests and blood transfusion tests, and simultaneously executes analysis processing on a large number of specimens. In addition, the automatic analysis device includes a dispensing probe device that performs suction and discharging, that is, dispensing of a liquid such as a specimen or a reagent.

For example, Patent Literature 1 describes an automatic analysis device including a dispensing probe device. The automatic analysis device described in Patent Literature 1 includes two reagent dispensing arms 5 and 6. The two reagent dispensing arms 5 and 6 rotate on the same plane around rotation shafts extending in a vertical direction.

A reagent tray 10 rotates a plurality of reagent material bits 3 along an outer track 1 and an inner track 2. A reaction disk 20 rotates a plurality of reaction containers along an outer circumference 21 and an inner circumference 22. The two reagent dispensing arms 5 and 6 suck a reagent material from the plurality of reagent material bits 3 of the reagent tray 10 and dispense the reagent material into the plurality of reaction containers of the reaction disk 20.

In a case where the two reagent dispensing arms 5 and 6 approach the reagent tray 10, the reagent dispensing arm 5 positioned adjacent to the reagent tray 10 first rotates, and then the reagent dispensing arm 6 rotates. Then, each of the reagent dispensing arms 5 and 6 sucks the reagent material from the reagent material bits 3 of the outer track 1 and the inner track 2 at a suction position.

In a case where the two reagent dispensing arms 5 and 6 approach the reaction disk 20, the reagent dispensing arm 6 positioned adjacent to the reaction disk 20 first rotates, and then the reagent dispensing arm 5 rotates. Then, each of the reagent dispensing arms 5 and 6 dispenses the reagent material into the reaction containers on the outer circumference 21 and the inner circumference 22 at a dispensing position.

Citation List

Patent Literature

Patent Literature 1: Chinese Patent Application Publication No. 103376331

SUMMARY

However, in the automatic analysis device described in Patent Literature 1, the two reagent dispensing arms 5 and 6 rotate on the same plane, and thus, the reagent dispensing arm that rotates later cannot overtake the preceding reagent dispensing arm.

The reagent dispensing arm may perform a cleaning operation until more than one cycle has elapsed in a cleaning tank. For example, in a case where the cleaning operation of the reagent dispensing arm 5 has not been completed, the reagent dispensing arm 6 needs to wait for completion of the cleaning operation of the reagent dispensing arm 5 even if a dispensing operation can be performed. Therefore, the automatic analysis device described in Patent Literature 1 has a problem that the number of dispensing actions processed within a certain period of time decreases.

In consideration of the above problems, an object of the present invention is to provide a dispensing probe device and an automatic analysis device capable of suppressing a decrease in the number of dispensing actions processed within a certain period of time.

In order to solve the above problems and achieve the object of the present invention, a dispensing probe device reflecting one aspect of the present invention includes: a first dispensing probe and a second dispensing probe extending in a vertical direction; a first support arm; a first drive mechanism; a second support arm; and a second drive mechanism. The first support arm supports an upper end of the first dispensing probe. The first drive mechanism moves the first support arm in the vertical direction and rotates the first support arm in a horizontal direction. The second support arm supports an upper end of the second dispensing probe. The second drive mechanism moves the second support arm in the vertical direction and rotates the second support arm in the horizontal direction. A distance from a rotation center of the first support arm to the first dispensing probe in the horizontal direction is longer than a distance from a rotation center of the second support arm to the second dispensing probe in the horizontal direction. A fan shape having an arc formed by a trajectory of one end of the second support arm that is far from the rotation center of the second support arm is included in a fan shape having an arc formed by a trajectory of the first dispensing probe.

The dispensing probe device described above is one aspect of the present invention, and an automatic analysis device reflecting one aspect of the present invention is also configured similarly to the dispensing probe device described above.

With the dispensing probe device and the automatic analysis device according to the present invention, it is possible to suppress a decrease in the number of dispensing actions processed within a certain period of time.

Problems, configurations, and effects other than those described above will be clarified by the following description of embodiments.

BRIEF DESCRIPTION OF DRAWINGS

FIG. 1 is a schematic configuration diagram illustrating an automatic analysis device according to a first embodiment of the present invention;

FIG. 2 is a perspective view of a dispensing probe device according to the first embodiment of the present invention;

FIG. 3 is a diagram illustrating an example of trajectories of two reagent probes according to the first embodiment of the present invention;

FIG. 4 is a diagram for describing a disposition of two reagent probes according to the first embodiment of the present invention;

FIG. 5 is a diagram illustrating a clearance area during rotational movement of the reagent probes and support arms according to the first embodiment of the present invention;

FIG. 6 is a diagram illustrating strokes of two drive shafts in a vertical direction according to the first embodiment of the present invention;

FIG. 7 is a diagram for describing an origin position detection mechanism of the dispensing probe device according to the first embodiment of the present invention;

FIG. 8 is a diagram illustrating a rotation origin detected portion for a sensor of the dispensing probe device according to the first embodiment of the present invention;

FIG. 9 is a block diagram illustrating a configuration example of a control system of the dispensing probe device according to the first embodiment of the present invention;

FIG. 10 is a flowchart illustrating a first example of origin return processing for the dispensing probe device according to the first embodiment of the present invention;

FIG. 11 is a perspective view illustrating a state in which two support arms of the dispensing probe device according to the first embodiment of the present invention intersect each other;

FIG. 12 is a flowchart illustrating a second example of the origin return processing for the dispensing probe device according to the first embodiment of the present invention;

FIG. 13 is a flowchart illustrating a third example of the origin return processing for the dispensing probe device according to the first embodiment of the present invention;

FIG. 14 is an explanatory diagram illustrating an origin position detection mechanism of a dispensing probe device according to a second embodiment of the present invention;

FIG. 15 is an explanatory diagram illustrating a state in which a first drive shaft of the dispensing probe device according to the second embodiment of the present invention is disposed at a vertical origin position;

FIG. 16 is an explanatory diagram illustrating the first drive shaft in a case where two support arms of the dispensing probe device according to the second embodiment of the present invention are in a cross arrangement state;

FIG. 17 is a block diagram illustrating a configuration example of a control system of the dispensing probe device according to the second embodiment of the present invention; and

FIG. 18 is a flowchart illustrating a second example of origin return processing in the dispensing probe device according to the second embodiment of the present invention.

DETAILED DESCRIPTION

Hereinafter, embodiments of a dispensing probe device and an automatic analysis device according to the present invention will be described in detail with reference to the drawings. In the drawings, the same members are denoted by the same reference numerals.

1. First Embodiment

<Configuration of Automatic Analysis Device>

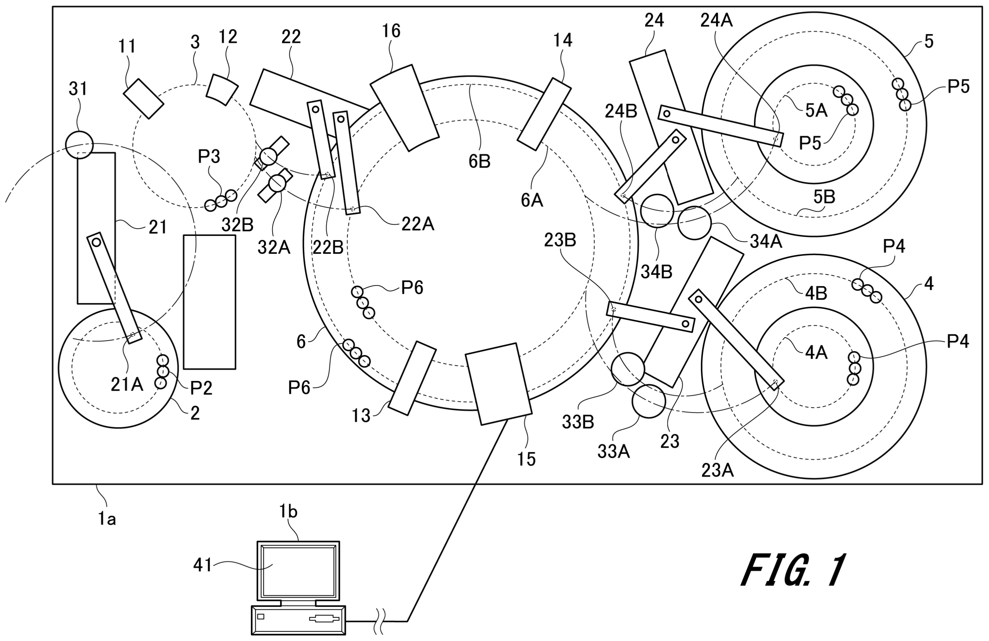

FIG. 1 is a schematic configuration diagram illustrating an automatic analysis device according to a first embodiment.

An automatic analysis device 1 illustrated in FIG. 1 is, for example, a biochemical analysis device that automatically measures the amount of a specific component contained in a biological sample such as blood or urine. The automatic analysis device 1 includes a measurement unit 1a and a control unit 1b.

The measurement unit 1a includes, for example, a sample turntable 2, a dilution turntable 3, a first reagent turntable 4, a second reagent turntable 5, and a reaction turntable 6. In addition, the measurement unit 1a includes a dilution stirring device 11, a dilution cleaning device 12, a first reaction stirring device 13, a second reaction stirring device 14, a multi-wavelength photometer 15, and a reaction container cleaning device 16.

The measurement unit 1a further includes a specimen dispensing unit 21, a diluted specimen dispensing unit 22, a first reagent dispensing unit 23, a second reagent dispensing unit 24, and a plurality of probe cleaning devices. The measurement unit 1a may further include a cleaning container holding unit (not illustrated).

The first reagent dispensing unit 23 and the second reagent dispensing unit 24 are specific examples of a dispensing probe device according to the present invention.

Meanwhile, the control unit 1b includes a display unit 41, and further includes an input unit, a storage unit, and a control unit as described in detail below. Hereinafter, details of these components will be described in order of the measurement unit 1a and the control unit 1b.

<Measurement Unit 1a>

[Sample turntable 2]

The sample turntable 2 is formed in a substantially cylindrical shape. The sample turntable 2 holds a plurality of specimen containers P2 arranged in a plurality of rows in a circumferential direction. The sample turntable 2 rotates in the circumferential direction by a drive mechanism (not illustrated) to convey the plurality of held specimen containers P2 in the circumferential direction.

In each specimen container P2 held on the sample turntable 2, a specimen to be measured or a control specimen for accuracy management is stored as a dispensing liquid. The sample turntable 2 conveys these various types of measurement target specimens to predetermined positions.

In addition to the specimen container P2, a diluent container in which a diluent is stored and a hemolytic agent container in which a hemolytic agent for performing hemolysis treatment is stored may be held on the sample turntable 2.

In addition, the sample turntable 2 may have a function of cooling the held specimen container P2 and other containers.

[Dilution Turntable 3]

The dilution turntable 3 is formed in a substantially cylindrical shape. The dilution turntable 3 holds a plurality of dilution containers P3 storing a dispensing liquid and arranged in a circumferential direction. The dilution turntable 3 rotates in the circumferential direction by a drive mechanism (not illustrated) to convey the plurality of held dilution containers P3 in the circumferential direction.

The specimen sucked from the specimen container P2 disposed on the sample turntable 2 and diluted (hereinafter, referred to as "diluted specimen") is injected as the dispensing liquid into the dilution container P3 held on the dilution turntable 3. The automatic analysis device 1 does not have to include the dilution turntable 3.

First Reagent Turntable 4 and Second Reagent Turntable 5

The first reagent turntable 4 corresponds to a containing unit and a first turntable according to the present invention. The first reagent turntable 4 is formed in a substantially cylindrical shape. The first reagent turntable 4 holds a plurality of first reagent containers P4 arranged in two rows in a circumferential direction. An inner line on which the plurality of first reagent containers P4 are arranged is referred to as a reagent line 4A, and an outer line on which the plurality of first reagent containers P4 are arranged is referred to as a reagent line 4B.

The first reagent turntable 4 rotates in the circumferential direction by a drive mechanism (not illustrated) to convey the plurality of held first reagent containers P4 in the circumferential direction. A first reagent is stored as a dispensing liquid in the plurality of first reagent containers P4.

The second reagent turntable 5 corresponds to the containing unit and the first turntable according to the present invention. The second reagent turntable 5 is formed in a substantially cylindrical shape. The second reagent turntable 5 holds a plurality of second reagent containers P5 arranged in two rows in a circumferential direction. An inner line on which the plurality of second reagent containers P5 are arranged is referred to as a reagent line 5A, and an outer line on which the plurality of second reagent containers P5 are arranged is referred to as a reagent line 5B.

The second reagent turntable 5 rotates in the circumferential direction by a drive mechanism (not illustrated) to convey the plurality of held second reagent containers P5 in the circumferential direction. A second reagent is stored as a dispensing liquid in the second reagent container P5.

[Reaction Turntable 6]

The reaction turntable 6 corresponds to a second turntable according to the present invention. The reaction turntable 6 is formed in a substantially cylindrical shape. The reaction turntable 6 holds a plurality of reaction containers P6 arranged in two rows in a circumferential direction. An inner line on which the plurality of reaction containers P6 are arranged is referred to as a reaction line 6A, and an outer line on which the plurality of reaction containers P6 are arranged is referred to as a reaction line 6B.

The reaction turntable 6 rotates in the circumferential direction by a drive mechanism (not illustrated) to convey the plurality of held reaction containers P6 in the circumferential direction.

Each of the diluted specimen taken from the dilution container P3 of the dilution turntable 3 and the first reagent taken from the first reagent container P4 of the first reagent turntable 4 or the second reagent taken from the second reagent container P5 of the second reagent turntable 5 is dispensed into the reaction container P6 in a predetermined amount. Then, the diluted specimen and the first reagent or the second reagent are stirred in the reaction container P6, so that reaction proceeds.

The reaction turntable 6 as described above includes a thermostatic bath (not illustrated). The thermostatic bath constantly keeps a temperature of the reaction container P6 constant. In a case where the automatic analysis device 1 does not include the dilution turntable 3, the specimen taken from the specimen container P2 of the sample turntable 2 is dispensed into the reaction container P6 held on the reaction turntable 6.

[Dilution Stirring Device 11]

The dilution stirring device 11 is disposed around the dilution turntable 3. The dilution stirring device 11 includes a stirring mechanism and a drive mechanism for driving the stirring mechanism. The dilution stirring device 11 inserts a stirring bar of the stirring mechanism into the dilution container P3 held on the dilution turntable 3, and stirs the measurement target specimen and the diluent.

[Dilution Cleaning Device 12]

The dilution cleaning device 12 is disposed around the dilution turntable 3. The dilution cleaning device 12 cleans the dilution container P3 after the diluted specimen is sucked by the diluted specimen dispensing unit 22 described below.

[First Reaction Stirring Device 13 and Second Reaction Stirring Device 14]

The first reaction stirring device 13 and the second reaction stirring device 14 are disposed around the reaction turntable 6. The first reaction stirring device 13 and the second reaction stirring device 14 stir the diluted specimen and the first reagent or the second reagent in the reaction container P6 held on the reaction turntable 6.

The first reaction stirring device 13 and the second reaction stirring device 14 each include a stirring mechanism and a drive mechanism for driving the stirring mechanism. Each of the first reaction stirring device 13 and the second reaction stirring device 14 inserts a stirring bar of the stirring mechanism into the reaction container P6 held at a predetermined position on the reaction turntable 6, and stirs the diluted specimen (or the specimen) and the first reagent or the second reagent. As a result, the reaction of the diluted specimen, the first reagent, and the second reagent proceeds.

[Multi-Wavelength Photometer 15]

The multi-wavelength photometer 15 is a specific example of a measuring unit according to the present invention. The multi-wavelength photometer 15 is disposed around the reaction turntable 6. The multi-wavelength photometer 15 performs optical measurement on the diluted specimen reacted with the first reagent and the second reagent in the reaction container P6 to detect a reaction state of the diluted specimen. The multi-wavelength photometer 15 outputs, as absorbances, amounts of various components in the specimen to the control unit 1b.

[Reaction Container Cleaning Device 16]

The reaction container cleaning device 16 is disposed around the reaction turntable 6. The reaction container cleaning device 16 cleans the inside of the reaction container P6 for which a test has been completed.

[Specimen Dispensing Unit 21]

The specimen dispensing unit 21 is disposed around the sample turntable 2 and the dilution turntable 3. The specimen dispensing unit 21 includes a thin-tube-shaped specimen probe 21A extending in a vertical direction. The specimen dispensing unit 21 operates according to a preset measurement program. The specimen dispensing unit 21 inserts a tip of the specimen probe 21A into the specimen in the specimen container P2 held on the sample turntable 2 and sucks a predetermined amount of specimen.

In addition, the specimen dispensing unit 21 supplies a predetermined amount of diluent (for example, physiological saline or pure water) into the specimen probe 21A. The specimen dispensing unit 21 inserts the tip of the specimen probe 21A into the dilution container P3 of the dilution turntable 3, and discharges the specimen sucked from the specimen container P2 and the predetermined amount of diluent into the dilution container P3. As a result, the measurement target specimen diluted to a concentration that is a predetermined multiple of the original is injected into the dilution container P3.

In a case where the automatic analysis device 1 does not include the dilution turntable 3, the specimen dispensing unit 21 inserts the tip of the specimen probe 21A into the reaction container P6 of the reaction turntable 6. Then, only the specimen sucked from the specimen container P2 is discharged into the reaction container P6, or the specimen sucked from the specimen container P2 and the predetermined amount of diluent are discharged into the reaction container P6.

The specimen probe 21A includes a liquid level detection mechanism (not illustrated). The liquid level detection mechanism detects contact between the tip of the specimen probe and a liquid level based on, for example, a capacitance between the liquid level and the tip of the specimen probe.

[Diluted Specimen Dispensing Unit 22]

The diluted specimen dispensing unit 22 is disposed between the dilution turntable 3 and the reaction turntable 6. The diluted specimen dispensing unit 22 includes diluted specimen probes 22A and 22B. Each of the diluted specimen probes 22A and 22B is formed in a thin tube shape extending in the vertical direction. The diluted specimen dispensing unit 22 operates according to a preset measurement program. The automatic analysis device 1 that does not include the dilution turntable 3 does not need to include the diluted specimen dispensing unit 22.

The diluted specimen dispensing unit 22 inserts tips of the diluted specimen probes 22A and 22B into different dilution containers P3 of the dilution turntable 3, respectively, and sucks a predetermined amount of diluted specimen. The diluted specimen dispensing unit 22 inserts the tip of the diluted specimen probe 22A into the reaction container P6 arranged in the reaction line 6A of the reaction turntable 6, and discharges the diluted specimen sucked from the dilution container P3 into the reaction container P6. In addition, the diluted specimen dispensing unit 22 inserts the tip of the diluted specimen probe 22B into the reaction container P6 arranged in the reaction line 6B of the reaction turntable 6, and discharges the diluted specimen sucked from the dilution container P3 into the reaction container P6.

[First Reagent Dispensing Unit 23]

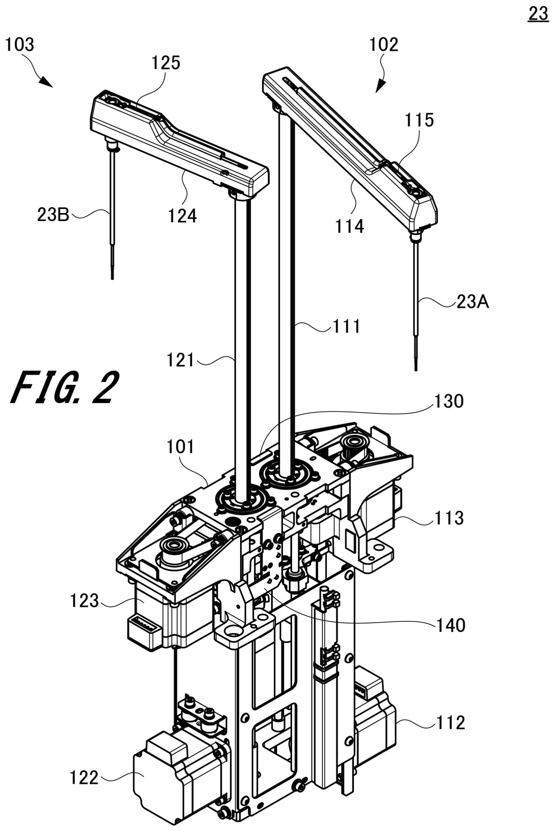

The first reagent dispensing unit 23 is disposed between the reaction turntable 6 and the first reagent turntable 4. The first reagent dispensing unit 23 includes first reagent probes 23A and 23B (see FIG. 2). The first reagent probe 23A corresponds to a first dispensing probe according to the present invention. The first reagent probe 23B corresponds to a second dispensing probe according to the present invention. The first reagent probes 23A and 23B are each formed in a thin tube shape extending in the vertical direction. The first reagent dispensing unit 23 operates according to a preset measurement program.

The first reagent dispensing unit 23 inserts a tip of the first reagent probe 23A into the first reagent container P4 arranged in the reagent line 4A of the first reagent turntable 4 and sucks a predetermined amount of first reagent. Then, the first reagent dispensing unit 23 inserts the tip of the first reagent probe 23A into the reaction container P6 arranged in the reaction line 6A of the reaction turntable 6, and discharges the first reagent sucked from the first reagent container P4.

The first reagent dispensing unit 23 inserts a tip of the first reagent probe 23B into the first reagent container P4 arranged in the reagent line 4B of the first reagent turntable 4 and sucks a predetermined amount of first reagent. Then, the first reagent dispensing unit 23 inserts the tip of the first reagent probe 23B into the reaction container P6 arranged in the reaction line 6B of the reaction turntable 6, and discharges the first reagent sucked from the first reagent container P4.

[Second Reagent Dispensing Unit 24]

The second reagent dispensing unit 24 is disposed between the reaction turntable 6 and the second reagent turntable 5. The second reagent dispensing unit 24 has the same configuration as the first reagent dispensing unit 23 and includes second reagent probes 24A and 24B (see FIG. 2). The second reagent probe 24A corresponds to the first dispensing probe according to the present invention. The second reagent probe 24B corresponds to the second dispensing probe according to the present invention. The second reagent dispensing unit 24 operates according to a preset measurement program.

The second reagent dispensing unit 24 inserts a tip of the second reagent probe 24A into the second reagent container P5 arranged in the reagent line 5A of the second reagent turntable 5 and sucks a predetermined amount of second reagent. Then, the second reagent dispensing unit 24 inserts the tip of the second reagent probe 24A into the reaction container P6 arranged in the reaction line 6A of the reaction turntable 6 and discharges the second reagent sucked from the second reagent container P5.

The second reagent dispensing unit 24 inserts a tip of the second reagent probe 24B into the second reagent container P5 arranged in the reagent line 5B of the second reagent turntable 5 and sucks a predetermined amount of second reagent. Then, the second reagent dispensing unit 24 inserts the tip of the second reagent probe 24B into the reaction container P6 arranged in the reaction line 6B of the reaction turntable 6 and discharges the second reagent sucked from the second reagent container P5.

[Probe Cleaning Device 31]

The probe cleaning device 31 is disposed on a track of the specimen probe 21A of the specimen dispensing unit 21. The probe cleaning device 31 cleans an outer wall of the specimen probe 21A. The probe cleaning device 31 includes a cleaning water supply tube and a cleaning tank. The cleaning water supply tube supplies cleaning water in a shower-like manner to the tip of the specimen probe 21A disposed above the cleaning tank. As a result, the outer wall of the specimen probe 21A is cleaned.

[Probe Cleaning Devices 32A and 32B]

The probe cleaning device 32A is disposed on a track of the diluted specimen probe 22A of the diluted specimen dispensing unit 22. The probe cleaning device 32A cleans an outer wall of the diluted specimen probe 22A. The probe cleaning device 32B is disposed on a track of the diluted specimen probe 22B of the diluted specimen dispensing unit 22. The probe cleaning device 32B cleans an outer wall of the diluted specimen probe 22B. The probe cleaning devices 32A and 32B each include a cleaning water supply tube and a cleaning tank.

[Probe Cleaning Devices 33A and 33B]

The probe cleaning device 33A is disposed on a track of the first reagent probe 23A of the first reagent dispensing unit 23. The probe cleaning device 33A cleans an outer wall of the first reagent probe 23A. The probe cleaning device 33B is disposed on a track of the first reagent probe 23B of the first reagent dispensing unit 23. The probe cleaning device 33B cleans an outer wall of the first reagent probe 23B. Each of the probe cleaning devices 33A and 33B includes a tube-shaped cleaning tank, a cleaning water supply tube provided on an inner wall side of a side surface of the cleaning tank, and a cleaning solution releasing port provided on an inner wall side of a bottom surface of the cleaning tank. The respective cleaning water supply tubes of the probe cleaning devices 33A and 33B supply cleaning water in a shower-like manner to the tips of the first reagent probes 23A and 23B disposed above the cleaning tank. The cleaning solution releasing port of each of the probe cleaning devices 33A and 33B has a tube shape and is configured to release a cleaning solution such as an alkaline detergent or an acid detergent from an upper end thereof, so that the first reagent probes 23A and 23B disposed above the cleaning solution releasing port can suck the cleaning solution.

[Probe Cleaning Devices 34A and 34B]

The probe cleaning device 34A is disposed on a track of the second reagent probe 24A of the second reagent dispensing unit 24. The probe cleaning device 34A cleans an outer wall of the second reagent probe 24A. The probe cleaning device 34B is disposed on a track of the second reagent probe 24B of the second reagent dispensing unit 24. The probe cleaning device 34B cleans an outer wall of the second reagent probe 24B. Each of the probe cleaning devices 34A and 34B includes a tube-shaped cleaning tank, a cleaning water supply tube provided on an inner wall side of a side surface of the cleaning tank, and a cleaning solution releasing port provided on an inner wall side of a bottom surface of the cleaning tank. The respective cleaning water supply tubes of the probe cleaning devices 34A and 34B supply cleaning

**EP 4 685 496 A2**

water in a shower-like manner to the tips of the second reagent probes 24A and 24B disposed above the cleaning tank. The cleaning solution releasing port of each of the probe cleaning devices 34A and 34B has a tube shape and is configured to release a cleaning solution such as an alkaline detergent or an acid detergent from an upper end thereof, so that the second reagent probes 24A and 24B disposed above the cleaning solution releasing port can suck the cleaning solution.

<Control Unit 1b>

The control unit 1b is connected to the drive mechanism of each component and the multi-wavelength photometer 15 included in the measurement unit 1a described above and a specimen supply device for supplying the specimen to the measurement unit 1a.

The specimen supply device includes a supply unit, a collection unit, a conveyance unit, and a barcode reader.

The supply unit supplies a specimen rack housing a plurality of (for example, five) specimens to the measurement unit 1a. The collection unit collects the specimen rack that has been subjected to dispensing processing by the specimen dispensing unit 21. The conveyance unit conveys the specimen rack from the supply unit to the collection unit. The barcode reader is disposed between the supply unit and a specimen taking position.

When an operator puts the specimen rack into the supply unit, the conveyance unit conveys the specimen rack to a barcode reading position of the barcode reader. The barcode reader reads barcode information attached to the specimen container. Subsequently, the conveyance unit conveys the specimen rack to the specimen taking position. Once the dispensing processing executed by the specimen dispensing unit 21 is completed, the conveyance unit conveys the specimen rack to the collection unit.

<First Reagent Dispensing Unit 23>

Next, a detailed configuration of the first reagent dispensing unit 23 will be described with reference to FIG. 2.

FIG. 2 is a perspective view of the first reagent dispensing unit 23.

As illustrated in FIG. 2, the first reagent dispensing unit 23 includes a base 101, a first dispensing mechanism 102, and a second dispensing mechanism 103. The base 101 is formed in a substantially rectangular parallelepiped shape elongated in the vertical direction. The first dispensing mechanism 102 and the second dispensing mechanism 103 are attached to the base 101.

[First Dispensing Mechanism 102]

The first dispensing mechanism 102 includes a first drive shaft 111, a first vertical drive unit 112, a first rotation drive unit 113, a first support arm 114, and the first reagent probe 23A. The first drive shaft 111, the first vertical drive unit 112, and the first rotation drive unit 113 correspond to a first drive mechanism according to the present invention.

The first drive shaft 111 is a round-bar-shaped member extending in the vertical direction. The first drive shaft 111 is supported by the base 101 so as to be movable in the vertical direction and rotatable in a horizontal direction.

The first vertical drive unit 112 is disposed at a lower portion of the base 101. The first vertical drive unit 112 moves the first drive shaft 111 in the vertical direction. The first vertical drive unit 112 includes, for example, a motor, a rack, and a pinion. The rack and the pinion convert a rotational motion of a rotation shaft of the motor into a linear motion of the first drive shaft 111 in the vertical direction. As the first vertical drive unit according to the present invention, other conversion mechanisms such as a ball screw and a belt pulley mechanism may be adopted instead of the rack and the pinion.

The first rotation drive unit 113 is disposed at an upper portion of the base 101. The first rotation drive unit 113 rotates the first drive shaft 111 in the horizontal direction. The first rotation drive unit 113 includes, for example, a motor and a toothed belt. The toothed belt transmits rotation of a rotation shaft of the motor to the first drive shaft 111. As the first rotation drive unit according to the present invention, other transmission mechanisms such as a gear train may be adopted instead of the toothed belt.

A rotation pulley (not illustrated) is attached to the first drive shaft 111. The toothed belt of the first rotation drive unit 113 meshes with the rotation pulley. The rotation pulley is formed integrally with a spline nut (not illustrated). The spline nut guides the movement of the first drive shaft 111 in the vertical direction (axial direction) and transmits a rotational torque to the first drive shaft 111. As a result, the first drive shaft 111 is guided by the spline nut to move in the vertical direction, and rotates together with the rotation pulley and the spline nut.

The first support arm 114 is formed of a substantially rectangular plate body elongated in the horizontal direction. One end portion of a lower surface of the first support arm 114 in a longitudinal direction is fixed to an upper end of the first drive shaft 111. The first support arm 114 moves in the vertical direction together with the first drive shaft 111, and rotates in the horizontal direction together with the first drive shaft 111. That is, the first support arm 114 moves in the axial direction of the first drive shaft 111 and rotates around an axis of the first drive shaft 111.

The first reagent probe 23A is detachably attached to the other end portion of the lower surface of the first support arm 114 in the longitudinal direction. The first reagent probe 23A is a dispensing probe that dispenses the first reagent contained in the first reagent container P4 into the reaction container P6.

8

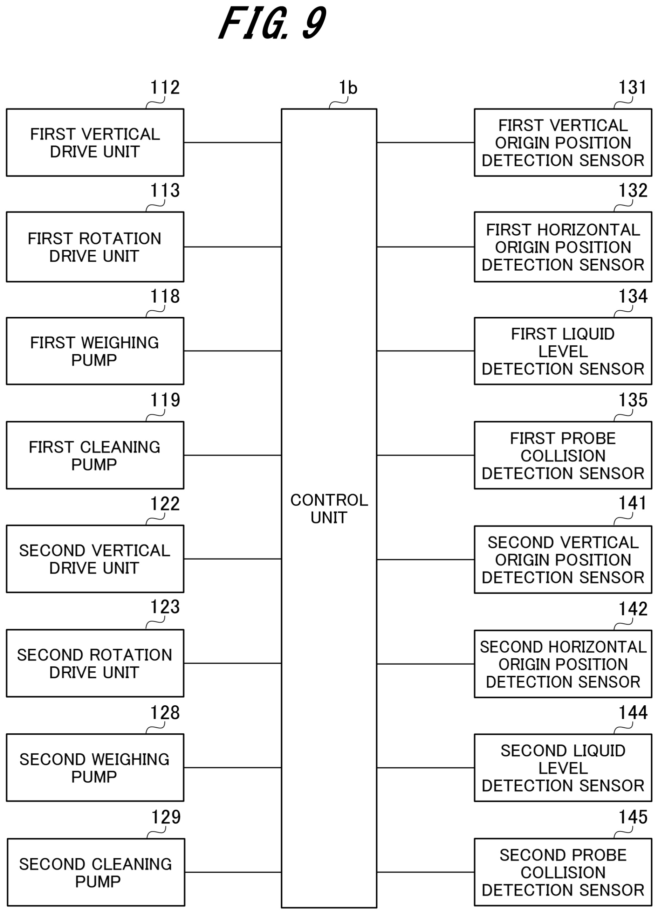

The first reagent probe 23A is formed in a thin tube shape extending in the vertical direction. One end of a tube 115 is connected to an upper end of the first reagent probe 23A. The tube 115 extends in the longitudinal direction of the first support arm 114. The other end of the tube 115 is connected to a first weighing pump 118 and a first cleaning pump 119 (see FIG. 9).

When the first weighing pump 118 is driven, the first reagent in the first reagent container P4 is sucked into the first reagent probe 23A. As a result, the sucked first reagent is contained in the first reagent probe 23A. When the first weighing pump 118 is driven, the first reagent contained in the first reagent probe 23A is discharged. As a result, the first reagent in the first reagent probe 23A is dispensed into the reaction container P6.

The first reagent probe 23A and the tube 115 are filled with pure water as system water. An air pocket is formed at an end portion of the first reagent probe 23A on a side opposite to the tube 115. The air pocket prevents the first reagent and the pure water from being mixed when the first reagent is sucked into the first reagent probe 23A. A liquid filled in the first reagent probe 23A and the tube 115 in advance is not limited to non-conductive pure water, and the first reagent probe 23A and the tube 115 may be filled with conductive physiological saline or other various liquids.

A first liquid level detection sensor 134 (see FIG. 9) is connected to the first reagent probe 23A. The first liquid level detection sensor 134 detects a value of a capacitance of the first reagent probe 23A.

The value of the capacitance detected by the first liquid level detection sensor 134 is output to the control unit 1b. The control unit 1b detects contact between the first reagent probe 23A and the liquid (the first reagent and the cleaning solution) based on the value (sensor output value) detected by the first liquid level detection sensor 134.

A movement range of the first drive shaft 111 in the vertical direction is set in advance. An upper end of the movement range of the first drive shaft 111 in the vertical direction is set at an origin position of the first drive shaft 111 in the vertical direction (hereinafter, referred to as "vertical origin position"). A lower end of the movement range of the first drive shaft 111 in the vertical direction is set at a position where the tip of the first reagent probe 23A does not come into contact with a bottom portion of the first reagent container P4 of the first reagent turntable 4 and a bottom portion of the reaction container P6 of the reaction turntable 6. The lower end of the movement range of the first drive shaft 111 in the vertical direction may be set at a position several mm lower than a bottom surface of the reaction container P6. In this case, the control unit 1b controls the first vertical drive unit 112 to stop the movement (descending) of the first drive shaft 111 at a predetermined position where the tip of the first reagent probe 23A does not come into contact with the bottom surface of the reaction container P6. That is, the movement range of the first drive shaft 111 in the vertical direction may be set by a function of software.

A rotation range of the first drive shaft 111 in the horizontal direction is set in advance. In a case where the first drive shaft 111 is positioned at one end of the rotation range, the first reagent probe 23A is positioned on the reagent line 4A of the first reagent turntable 4 (see FIG. 1). Therefore, when the first drive shaft 111 is rotated to one end of the rotation range and then descends, the first reagent probe 23A is inserted into the first reagent container P4 arranged in the reagent line 4A. One end of the rotation range of the first drive shaft 111 is set to an origin position of the first drive shaft 111 in the horizontal direction (hereinafter, referred to as "horizontal origin position").

On the other hand, in a case where the first drive shaft 111 is positioned at the other end of the rotation range, the first reagent probe 23A is positioned on the reaction line 6A of the reaction turntable 6. Therefore, when the first drive shaft 111 is rotated to the other end of the rotation range and then descends, the first reagent probe 23A is inserted into the reaction container P6 arranged in the reaction line 6A.

A rotation direction of the first drive shaft 111 from the other end to one end of a movement range in the horizontal direction is defined as a first rotation direction. Further, a rotation direction of the first drive shaft 111 from one end to the other end of the movement range in the horizontal direction is defined as a second rotation direction. In the present embodiment, the first rotation direction is a counterclockwise direction when the automatic analysis device 1 is viewed from above, and the second rotation direction is a clockwise direction when the automatic analysis device 1 is viewed from above.

[Second Dispensing Mechanism 103]

The second dispensing mechanism 103 includes a second drive shaft 121, a second vertical drive unit 122, a second rotation drive unit 123, a second support arm 124, and the first reagent probe 23B. The second drive shaft 121, the second vertical drive unit 122, and the second rotation drive unit 123 correspond to a second drive mechanism according to the present invention.

The second drive shaft 121 is a round-bar-shaped member extending in the vertical direction. The second drive shaft 121 is supported by the base 101 so as to be movable in the vertical direction and rotatable in the horizontal direction.

The second vertical drive unit 122 is disposed at the lower portion of the base 101. The second vertical drive unit 122 moves the second drive shaft 121 in the vertical direction. The second vertical drive unit 122 includes, for example, a motor, a rack, and a pinion. The rack and the pinion convert a rotational motion of a rotation shaft of the motor into a linear motion of the second drive shaft 121 in the vertical direction. As the second vertical drive unit according to the present invention, other conversion mechanisms such as a ball screw and a belt pulley mechanism may be adopted instead of the rack and the pinion.

The second rotation drive unit 123 is disposed at the upper portion of the base 101. The second rotation drive unit 123 rotates the second drive shaft 121 in the horizontal direction. The second rotation drive unit 123 includes, for example, a motor and a toothed belt. The toothed belt transmits rotation of a rotation shaft of the motor to the second drive shaft 121. As the second rotation drive unit according to the present invention, other transmission mechanisms such as a gear train may be adopted instead of the toothed belt.

The second support arm 124 is formed of a substantially rectangular plate body elongated in the horizontal direction. A length of the second support arm 124 in a longitudinal direction is smaller than a length of the first support arm 114 in the longitudinal direction. One end portion of a lower surface of the second support arm 124 in the longitudinal direction is fixed to an upper end of the second drive shaft 121. The second support arm 124 moves in the vertical direction together with the second drive shaft 121, and rotates in the horizontal direction together with the second drive shaft 121. That is, the second support arm 124 moves in an axial direction of the second drive shaft 121 and rotates around an axis of the second drive shaft 121.

The first reagent probe 23B is detachably attached to the other end of the lower surface of the second support arm 124 in the longitudinal direction. The first reagent probe 23B is a dispensing probe that dispenses the first reagent contained in the first reagent container P4 into the reaction container P6.

The first reagent probe 23B is the same as the first reagent probe 23A, and is formed in a thin tube shape extending in the vertical direction. One end of a tube 125 is connected to an upper end of the first reagent probe 23B. The tube 125 extends in the longitudinal direction of the second support arm 124. The other end of the tube 125 is connected to a second weighing pump 128 and a second cleaning pump 129 (see FIG. 9).

When the second weighing pump 128 is driven, the first reagent in the first reagent container P4 is sucked into the first reagent probe 23B. As a result, the sucked first reagent is contained in the first reagent probe 23B. When the second weighing pump 128 is driven, the first reagent contained in the first reagent probe 23B is discharged. As a result, the first reagent in the first reagent probe 23B is dispensed into the reaction container P6.

The first reagent probe 23B and the tube 125 are filled with pure water as system water. An air pocket is formed at an end portion of the first reagent probe 23B on a side opposite to the tube 125. The air pocket prevents the first reagent and the pure water from being mixed when the first reagent is sucked into the first reagent probe 23B.

A second liquid level detection sensor 144 (see FIG. 9) is connected to the first reagent probe 23B. The second liquid level detection sensor 144 detects a value of a capacitance of the first reagent probe 23B.

The value of the capacitance detected by the second liquid level detection sensor 144 is output to the control unit 1b. The control unit 1b detects contact between the first reagent probe 23B and the liquid (the first reagent and the cleaning solution) based on the value (sensor output value) detected by the second liquid level detection sensor 144.

The second drive shaft 121 is shorter than the first drive shaft 111. A movement range of the second drive shaft 121 in the vertical direction is smaller than the movement range of the first drive shaft 111 in the vertical direction. An upper end of the movement range of the second drive shaft 121 in the vertical direction is set at a position lower than the upper end of the movement range of the first drive shaft 111 in the vertical direction.

The upper end of the movement range of the second drive shaft 121 in the vertical direction is set at a vertical origin position of the second drive shaft 121. A lower end of the movement range of the second drive shaft 121 in the vertical direction is set at a position where the tip of the first reagent probe 23B does not come into contact with the bottom portion of the first reagent container P4 of the first reagent turntable 4 and the bottom portion of the reaction container P6 of the reaction turntable 6. The lower end of the movement range of the second drive shaft 121 in the vertical direction may be set at a position several mm lower than the bottom surface of the reaction container P6. In this case, the control unit 1b controls the second vertical drive unit 122 to stop the movement (descending) of the second drive shaft 121 at a predetermined position where the tip of the first reagent probe 23B does not come into contact with the bottom surface of the reaction container P6. That is, the movement range of the second drive shaft 121 in the vertical direction may be set by a function of software.

A rotation range of the second drive shaft 121 in the horizontal direction is set in advance. In a case where the second drive shaft 121 is positioned at one end of the rotation range, the first reagent probe 23B is positioned on the reagent line 4B of the first reagent turntable 4 (see FIG. 1). Therefore, when the second drive shaft 121 is rotated to one end of the rotation range and then descends, the first reagent probe 23B is inserted into the first reagent container P4 arranged in the reagent line 4B.

On the other hand, in a case where the second drive shaft 121 is positioned at the other end of the rotation range, the first reagent probe 23B is positioned on the reaction line 6B of the reaction turntable 6. Therefore, when the second drive shaft 121 is rotated to the other end of the rotation range and then descends, the first reagent probe 23B is inserted into the reaction container P6 arranged in the reaction line 6B. The other end of the rotation range of the second drive shaft 121 is set at a horizontal origin position of the second drive shaft 121.

Similarly to the horizontal origin position of the first drive shaft 111, the horizontal origin position of the second drive shaft 121 may be set at one end (a side on which the first reagent probe 23B is positioned on the reagent line 4B) of the rotation range. The horizontal origin position of the first drive shaft 111 may be set at the other end (a side on which the first reagent probe 23A is positioned on the reaction line 6A) of the rotation range. Furthermore, the horizontal origin positions of the first drive shaft 111 and the second drive shaft 121 can be set at arbitrary positions in the rotation range.

As described above, the first reagent dispensing unit 23 can independently control operations of the first drive shaft 111 and the second drive shaft 121. In addition, the first reagent dispensing unit 23 can independently control suction and discharge operations of the first reagent probes 23A and 23B. As a result, the first reagent dispensing unit 23 can suppress a decrease in the number of dispensing actions to be processed within a certain period of time.

The second reagent dispensing unit 24 (see FIG. 1) has the same configuration as the first reagent dispensing unit 23. Names of the dispensing probes of the second reagent dispensing unit 24 are the second reagent probes 24A and 24B. The second reagent probes 24A and 24B are the same members as the first reagent probes 23A and 23B of the first reagent dispensing unit 23.

<Tracks of Two Reagent Probes>

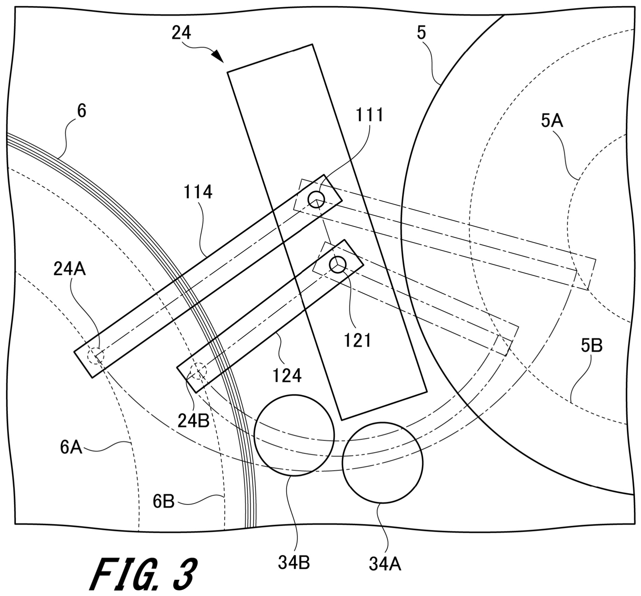

Next, the tracks of the second reagent probes 24A and 24B will be described with reference to FIG. 3.

FIG. 3 is a diagram illustrating an example of the tracks of the second reagent probes 24A and 24B.

The tracks of the first reagent probes 23A and 23B of the first reagent dispensing unit 23 are similar to the tracks of the second reagent probes 24A and 24B of the second reagent dispensing unit 24. Therefore, here, as the track of the dispensing probe according to the present invention, the tracks of the second reagent probes 24A and 24B will be described by way of example.

As illustrated in FIG. 3, the length of the first support arm 114 of the second reagent dispensing unit 24 in the longitudinal direction is larger than the length of the second support arm 124 in the longitudinal direction. A fan shape having an arc formed by a trajectory of one end of the second support arm 124 in the longitudinal direction is included in a fan shape having an arc formed by a track of the second reagent probe 24A attached to the first support arm 114. As a result, the track of the second reagent probe 24A and the track of the second reagent probe 24B do not intersect each other.

A first rotation height is larger than a second rotation height, the first rotation height being a position of the first support arm 114 in the vertical direction when the first support arm 114 is rotated in the horizontal direction, and the second rotation height being a position of the second support arm 124 in the vertical direction when the second support arm 124 is rotated in the horizontal direction. The first support arm 114 positioned at the first rotation height does not come into contact with the second support arm 124 positioned at the second rotation height. As a result, the second support arm 124 and the second reagent probe 24B do not interfere with the first support arm 114 and the second reagent probe 24A while rotating in the horizontal direction.

A length La of the first support arm 114 in the longitudinal direction is set to be equal to or larger than a length obtained by adding a diameter Dm of the second reagent probe 24A, a distance Dt between the first drive shaft 111 and the second drive shaft 121, and a safety clearance d1 to a length Lb of the second support arm 124 in the longitudinal direction. That is, the length La is set to a length that satisfies the following Formula (1).

[Formula 1]

$$ La \geq Lb + Dm + Dt + d1 \quad \ldots (1) $$

The safety clearance d1 is a constant determined according to an amplitude in a case where the second reagent probe 24A is displaced in the horizontal direction due to vibration of the first support arm 114 or the like, or an adjustment clearance necessary for manufacturing the automatic analysis device 1. The safety clearance d1 has a unique value depending on a type of the automatic analysis device.

A central angle of a fan shape having an arc formed by the track of the first reagent probe 23A does not need to be equal to a central angle of the fan shape having the arc formed by the track of the second reagent probe 24A.

<Disposition of Two Reagent Probes>

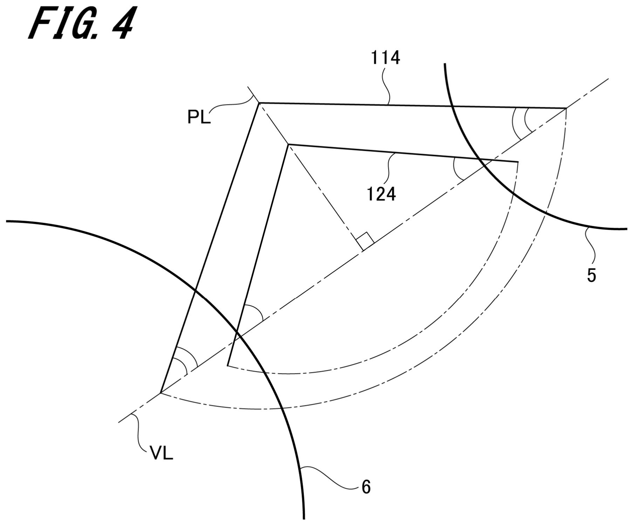

Next, a disposition of the second reagent probes 24A and 24B will be described with reference to FIG. 4.

FIG. 4 is a diagram for describing the disposition of the second reagent probes 24A and 24B.

Geometric conditions to be satisfied when the second reagent probes 24A and 24B are disposed will be described.

As illustrated in FIG. 4, first, a virtual line VL connecting a rotation center of the reaction turntable 6 and a rotation center of the second reagent turntable 5 is drawn. Next, a perpendicular line PL substantially perpendicular to the virtual line VL is drawn. The rotation centers of the first support arm 114 and the second support arm 124 are disposed on the perpendicular line PL. That is, the first drive shaft 111 and the second drive shaft 121 (see FIG. 2) are disposed on the perpendicular line PL.

A position where the perpendicular line PL is drawn is near the middle between the reaction turntable 6 and the second reagent turntable 5, and is preferably a position where both ends of rotation ranges of the first support arm 114 and the second support arm 124 and a line connecting the rotation centers of the first support arm 114 and the second support arm 124 form an isosceles triangle. As a result, the rotation ranges of the first support arm 114 and the second support arm 124 can be decreased.

In addition, a distance between the rotation center of the first support arm 114 and the rotation center of the second support arm 124 is set to a length by which the first support arm 114 and the second support arm 124 do not overlap each other when viewed from the vertical direction at both ends of the rotation ranges of the first support arm 114 and the second support arm 124. Accordingly, even when each of the first support arm 114 and the second support arm 124 moves in the vertical direction at one end or the other end of the rotation range, the first support arm 114 and the second support arm 124 do not interfere with each other.

In addition, the lengths of the first support arm 114 and the second support arm 124 are set to satisfy Formula (1) described above. As a result, the fan shape having the arc formed by the trajectory of one end of the second support arm 124 in the longitudinal direction is included in the fan shape having the arc formed by the track of the second reagent probe 24A attached to the first support arm 114. As a result, if the first support arm 114 and the second support arm 124 are disposed at positions not interfering with each other in the vertical direction, the first support arm 114 (the second reagent probe 24A) and the second support arm 124 (the second reagent probe 24B) can perform a rotation operation of overtaking each other.

<Clearance Area During Rotational Movement of Reagent Probes and Support Arms>

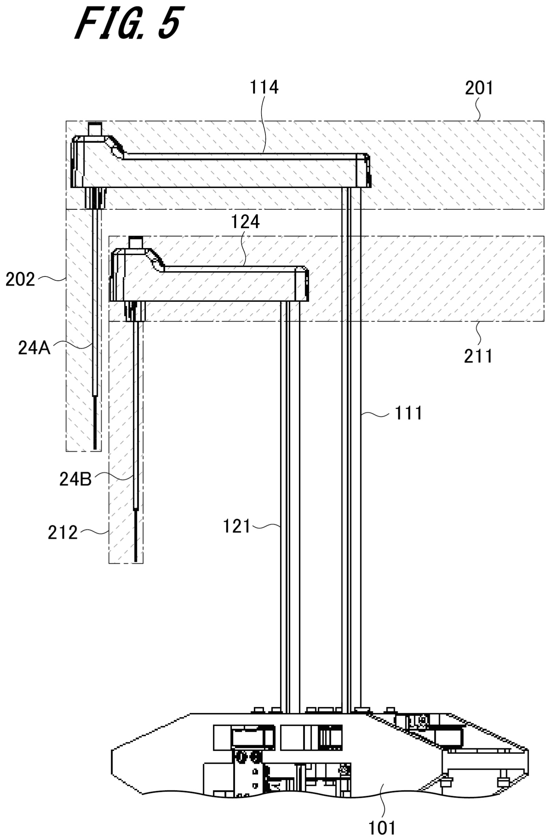

Next, clearance areas during rotational movement of the reagent probes and the support arms will be described with reference to FIG. 5.

FIG. 5 is a diagram illustrating clearance areas during rotational movement of the second reagent probes 24A and 24B and the support arms 114 and 124.

As illustrated in FIG. 5, the first drive shaft 111 and the first support arm 114 perform the rotational movement after ascending to the upper end of the movement range of the first drive shaft 111 in the vertical direction at both ends of the rotation range. Here, an area in the air occupied by the first support arm 114 during the rotational movement is defined as a first support arm clearance area 201. An area in the air occupied by the second reagent probe 24A during the rotational movement is defined as a probe A clearance area 202.

The second drive shaft 121 and the second support arm 124 perform the rotational movement after ascending to the upper end of the movement range of the second drive shaft 121 in the vertical direction at both ends of the rotation range. Here, an area in the air occupied by the second support arm 124 during the rotational movement is defined as a second support arm clearance area 211. An area in the air occupied by the second reagent probe 24B during the rotational movement is defined as a probe B clearance area 212.

The first support arm clearance area 201 is set above the second support arm clearance area 211. The first support arm clearance area 201 does not overlap the second support arm clearance area 211 when viewed from the horizontal direction. Further, the probe A clearance area 202 is set outside the second support arm clearance area 211 and the probe B clearance area 212 in a radial direction around the second drive shaft 121. Therefore, the first support arm 114 and the second reagent probe 24A do not interfere with the second support arm 124 and the second reagent probe 24B during the rotational movement.

<Strokes of Drive Shafts>

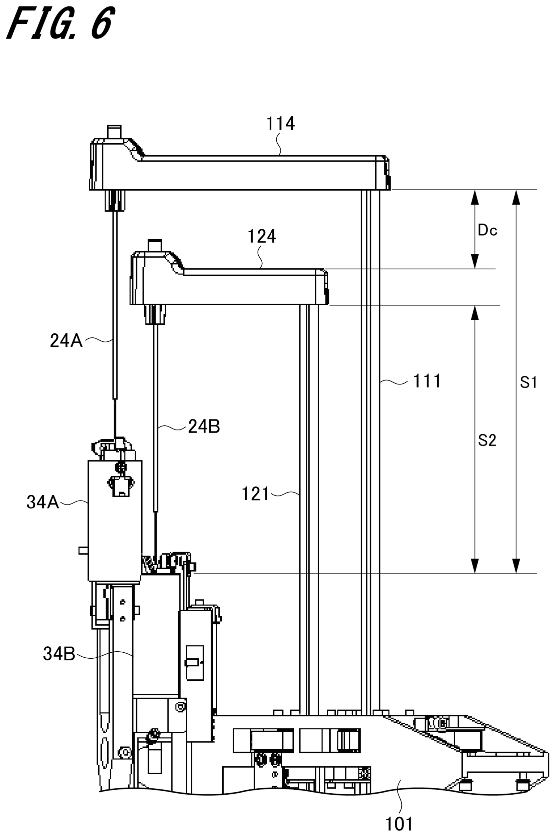

Next, strokes of the first drive shaft 111 and the second drive shaft 121 will be described with reference to FIG. 6.

FIG. 6 is a diagram illustrating the strokes of the first drive shaft 111 and the second drive shaft 121.

As illustrated in FIG. 6, the second reagent probes 24A and 24B are set to have the same length.

The second reagent probes 24A and 24B suck and discharge the second reagent at the lower ends (hereinafter, referred to as "lower end positions") of the movement ranges of the first drive shaft 111 (the first support arm 114) and the second drive shaft 121 (the second support arm 124) in the vertical direction.

The first drive shaft 111 and the second drive shaft 121 rotate in the horizontal direction at the upper ends (hereinafter, referred to as "upper end positions") of the respective movement ranges in the vertical direction. The upper end position of the first drive shaft 111 is higher than the upper end position of the second drive shaft 121. Meanwhile, a stroke S1 of the first drive shaft 111 (the first support arm 114) is longer than a stroke S2 of the second drive shaft 121 (the second support arm 124). Therefore, height positions of the tips of the second reagent probes 24A and 24B in the vertical direction when sucking and discharging the second reagent can be the same as each other.

When the second reagent probe 24A is cleaned by the probe cleaning device 34A, first, the first drive shaft 111 is rotated in the horizontal direction at the upper end position, and the second reagent probe 24A is disposed above the cleaning tank in the probe cleaning device 34A. At this time, the cleaning water supply tube of the probe cleaning device 34A supplies the cleaning water in a shower-like manner to the tip of the second reagent probe 24A disposed above the cleaning tank. As a result, the second reagent probe 24A is cleaned.

When the second reagent probe 24B is cleaned by the probe cleaning device 34B, first, the second drive shaft 121 is rotated in the horizontal direction at the upper end position, and the second reagent probe 24B is disposed above the cleaning tank in the probe cleaning device 34B. At this time, the cleaning water supply tube of the probe cleaning device 34B supplies the cleaning water in a shower-like manner to the tip of the second reagent probe 24B disposed above the cleaning tank. As a result, the second reagent probe 24B is cleaned.

Positions of the probe cleaning devices 34A and 34B in the horizontal direction are set on the tracks of the second reagent probes 24A and 24B and within the rotation ranges of the second reagent probes 24A and 24B (the drive shafts 111 and 121) (see FIG. 1). Further, the probe cleaning devices 34A and 34B are close to each other. Therefore, in a case where the second reagent probe 24A and the second reagent probe 24B are simultaneously cleaned, a part of the first support arm 114 and a part of the second support arm 124 overlap each other when viewed from the vertical direction.

On the other hand, a position of the probe cleaning device 34A in the vertical direction is higher than a position of the probe cleaning device 34B in the vertical direction. In the present embodiment, a difference between the positions of the probe cleaning devices 34A and 34B in the vertical direction is equal to a distance between the lower surface of the first support arm 114 at the upper end position of the first drive shaft 111 and an upper surface of the second support arm 124 at the upper end position of the second drive shaft 121 in the vertical direction. Therefore, during the cleaning of the second reagent probe 24A, the first support arm 114 is positioned at a height at which the first support arm 114 does not interfere with the second support arm 124 that is cleaning the second reagent probe 24B.

In normal cleaning of the probes including the second reagent probes 24A and 24B, it is not necessary to move the probes upward and downward in the cleaning tank, and the second reagent probes 24A and 24B are cleaned at the upper end positions in the respective movement ranges of the first drive shaft 111 and the second drive shaft 121 in the vertical direction. Therefore, even when the normal cleaning of the second reagent probe 24A and the normal cleaning of the second reagent probe 24B are performed at the same time, the first support arm 114 and the second reagent probe 24B do not interfere with each other.

On the other hand, each probe may require intensive cleaning, which is powerful cleaning, to avoid contamination between specimens and between reagents and the like. In this case, the probe sucks the cleaning solution from the cleaning solution releasing port provided in the cleaning tank. In a case where the probe sucks the cleaning solution, the probe needs to perform a descending operation and then perform an ascending operation (be moved upward and downward) in the cleaning tank.

For example, during the normal cleaning of the second reagent probe 24B attached to the second support arm 124, the second reagent probe 24A attached to the first support arm 114 may be subjected to the intensive cleaning. In this case, the second reagent probe 24A is moved upward and downward in the cleaning tank of the probe cleaning device 34A. Therefore, it is necessary to prevent the first support arm 114 that moves upward and downward from interfering with the second support arm 124.

Therefore, the distance between the lower surface of the first support arm 114 when the first drive shaft 111 is disposed at the upper end position and the upper surface of the second support arm 124 when the second drive shaft 121 is disposed at the upper end position in the vertical direction is set to a mutual interference avoidance distance Dc. The mutual interference avoidance distance Dc is an isolation distance set for the purpose of avoiding interference between the support arms 114 and 124 when the probe cleaning devices 34A and 34B clean the second reagent probes 24A and 24B.

The mutual interference avoidance distance Dc is set to be equal to or longer than a length obtained by adding a safety clearance d2 to a depth Dp of the cleaning solution releasing port. That is, the mutual interference avoidance distance Dc is determined by the following Formula (2).

[Formula 2]

$$Dc \geq Dp + d2 \quad \cdots (2)$$

The depth Dp of the cleaning solution releasing port is equal to a stroke in which the second reagent probe 24A moves upward and downward to suck the cleaning solution in the cleaning tank. The depth Dp of the cleaning solution releasing port has a unique value depending on a type of the cleaning solution releasing port. The safety clearance d2 is a constant determined according to a height of a protrusion such as a pipe tube disposed on the second support arm 124 or a height of a protrusion disposed on the lower surface of the first support arm 114. The safety clearance d2 has a unique value depending on types of the first support arm 114 and the second support arm 124.

In the present embodiment, in the normal cleaning, the second reagent probes 24A and 24B are cleaned without being moved upward and downward in the cleaning tank. However, the dispensing probe device according to the present invention may also be configured to clean the reagent probe by moving the reagent probe upward and downward in the cleaning tank in the normal cleaning in order to improve cleaning efficiency. However, a descending distance of the reagent probe in the cleaning tank is set to be equal to or shorter than the depth Dp of the cleaning solution releasing port.

<Origin Position Detection Mechanism>

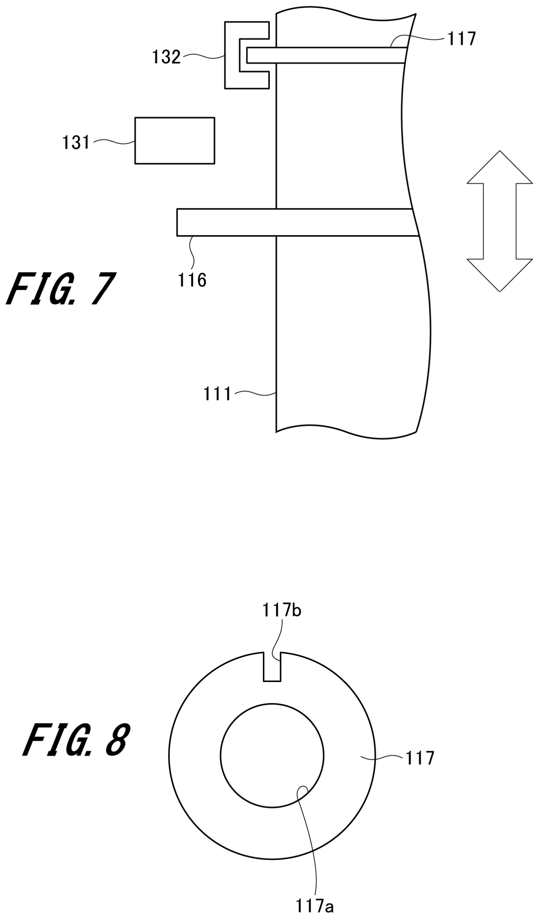

Next, origin position detection mechanisms of the first drive shaft 111 and the second drive shaft 121 will be described with reference to FIGS. 7 and 8.

FIG. 7 is a diagram illustrating the origin position detection mechanism of the first reagent dispensing unit 23. FIG. 8 is a diagram illustrating a rotation origin detected portion of the first reagent dispensing unit 23.

As illustrated in FIG. 7, the origin position detection mechanism of the first drive shaft 111 in the first reagent dispensing unit 23 includes a first vertical origin position detection sensor 131, a first horizontal origin position detection sensor 132, a vertical origin detected portion 116, and a rotation origin detected portion 117.

Sensor holding plates 130 and 140 are attached to a side surface of the base 101 (see FIG. 2) in the first reagent dispensing unit 23. The sensor holding plate 130 is disposed at a position facing the first drive shaft 111 in the horizontal direction. The sensor holding plate 130 holds the first vertical origin position detection sensor 131 and the first horizontal origin position detection sensor 132.

The vertical origin detected portion 116 is attached to the first drive shaft 111 via a slider (not illustrated). The vertical origin detected portion 116 is disposed at a position facing the first vertical origin position detection sensor 131 in the vertical direction. The vertical origin detected portion 116 is formed in a flat plate shape having a plane substantially perpendicular to the horizontal direction. The rotation origin detected portion 117 is fixed to the rotation pulley (not illustrated) of the first drive shaft 111. The rotation origin detected portion 117 is disposed at a position facing the first horizontal origin position detection sensor 132 in the horizontal direction.

As illustrated in FIG. 8, the rotation origin detected portion 117 is formed in a ring shape having a fitting hole 117a to be fitted onto the first drive shaft 111. The rotation origin detected portion 117 has a slit 117b for detecting a horizontal origin position of the first drive shaft 111. The slit 117b is formed in a substantially rectangular shape extending in the radial direction from an outer circumferential surface of the rotation origin detected portion 117.

The first vertical origin position detection sensor 131 and the first horizontal origin position detection sensor 132 illustrated in FIG. 7 are, for example, transmissive photosensors. An optical axis of the first vertical origin position detection sensor 131 extends in the horizontal direction. The first vertical origin position detection sensor 131 detects that the first drive shaft 111 is disposed at a vertical origin position when the optical axis is blocked by the vertical origin detected portion 116. An optical axis of the first horizontal origin position detection sensor 132 extends in the vertical direction. The first horizontal origin position detection sensor 132 detects that the first drive shaft 111 is disposed at the horizontal origin position when the optical axis passes through the slit 117b of the rotation origin detected portion 117.

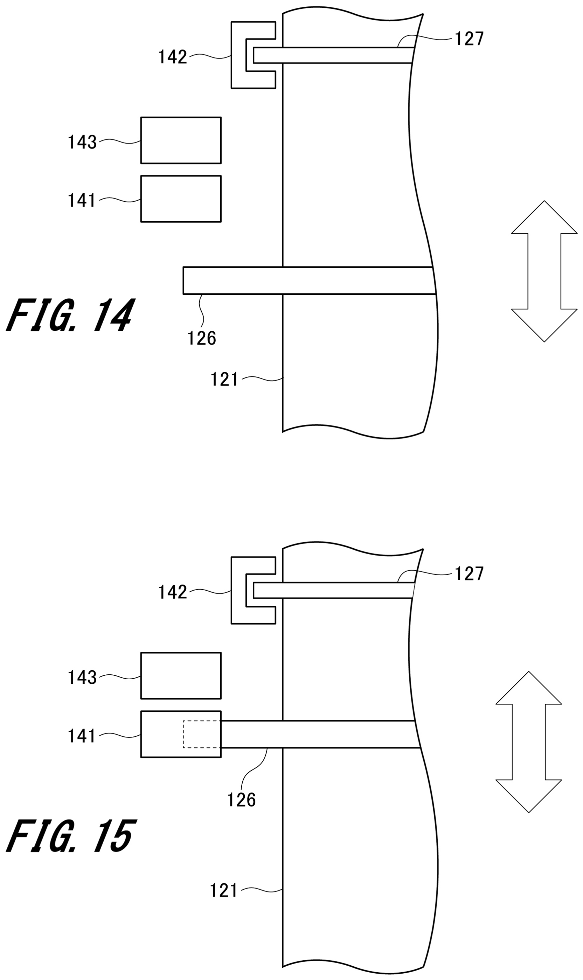

The origin position detection mechanism of the second drive shaft 121 in the first reagent dispensing unit 23 includes a second vertical origin position detection sensor 141 (see FIG. 9), a second horizontal origin position detection sensor 142 (see FIG. 9), a vertical origin detected portion 126 (see FIG. 14), and a rotation origin detected portion 127 (see FIG. 14).

The second vertical origin position detection sensor 141 and the second horizontal origin position detection sensor 142 are the same sensors as the first vertical origin position detection sensor 131 and the first horizontal origin position detection sensor 132. The second vertical origin position detection sensor 141 and the second horizontal origin position detection sensor 142 are held by the sensor holding plate 140. The sensor holding plate 140 is disposed at a position facing the second drive shaft 121 in the horizontal direction.

The vertical origin detected portion 126 is the same as the vertical origin detected portion 116 described above, and the rotation origin detected portion 127 is the same as the rotation origin detected portion 117. The vertical origin detected portion 126 is attached to the second drive shaft 121 via a slider (not illustrated). The rotation origin detected portion 127 is fixed to a rotation pulley (not illustrated) of the second drive shaft 121.

The second vertical origin position detection sensor 141 detects that the second drive shaft 121 is disposed at a vertical origin position when an optical axis of the second vertical origin position detection sensor 141 is blocked by the vertical origin detected portion 126. The second horizontal origin position detection sensor 142 detects that the second drive shaft 121 is disposed at a horizontal origin position when an optical axis of the second horizontal origin position detection sensor 142 passes through a slit of the rotation origin detected portion 127.

The origin position detection mechanism of the second reagent dispensing unit 24 is the same as the origin position detection mechanism of the first reagent dispensing unit 23 described above.

<Control System of First Reagent Dispensing Unit 23>

Next, a configuration example of a control system of the first reagent dispensing unit 23 will be described with reference to FIG. 9.

FIG. 9 is a block diagram illustrating the configuration example of the control system of the first reagent dispensing unit 23.

The control unit 1b includes, for example, a central processing unit (CPU), a read only memory (ROM), and a random access memory (RAM). The CPU reads various processing programs stored in the ROM and loads the processing programs into the RAM. The CPU controls an operation of each drive mechanism of the measurement unit 1a according to the loaded programs.

The ROM stores various processing programs for controlling the operation of each drive mechanism of the measurement unit 1a, parameters and table data necessary for executing the programs, various files, and the like. The RAM is implemented by, for example, a volatile semiconductor memory. The RAM forms a work area for temporarily storing various processing programs, input or output data, parameters, and the like read from the ROM in various steps of processing executed by the CPU.

The first vertical drive unit 112, the first rotation drive unit 113, the first weighing pump 118, the first cleaning pump 119, the second vertical drive unit 122, the second rotation drive unit 123, the second weighing pump 128, and the second cleaning pump 129 of the first reagent dispensing unit 23 are electrically connected to the control unit 1b. Although not illustrated in FIG. 9, the control unit 1b is electrically connected to drive units of the first reagent turntable 4, the second reagent turntable 5, the reaction turntable 6, the specimen dispensing unit 21, the second reagent dispensing unit 24, and the like.

The first vertical drive unit 112 moves the first drive shaft 111 in the vertical direction according to a drive control signal supplied from the control unit 1b. The first rotation drive unit 113 rotates the first drive shaft 111 in the horizontal direction according to a drive control signal supplied from the control unit 1b. The first weighing pump 118 sucks the first reagent into the first reagent probe 23A according to a drive control signal supplied from the control unit 1b. Further, the first weighing pump 118 discharges the first reagent from the first reagent probe 23A according to a drive control signal supplied from the control unit 1b.

The second vertical drive unit 122 moves the second drive shaft 121 in the vertical direction according to a drive control signal supplied from the control unit 1b. The second rotation drive unit 123 rotates the second drive shaft 121 in the horizontal direction according to a drive control signal supplied from the control unit 1b. The second weighing pump 128 sucks the first reagent into the first reagent probe 23B according to a drive control signal supplied from the control unit 1b. Further, the second weighing pump 128 discharges the first reagent from the first reagent probe 23B according to a drive control signal supplied from the control unit 1b.

The first vertical origin position detection sensor 131, the first horizontal origin position detection sensor 132, the first liquid level detection sensor 134, and a first probe collision detection sensor 135 of the first reagent dispensing unit 23 are electrically connected to the control unit 1b.

The first vertical origin position detection sensor 131 detects that the first drive shaft 111 is disposed at the vertical origin position, and transmits the detection result to the control unit 1b. The first horizontal origin position detection sensor 132 detects that the first drive shaft 111 is disposed at the horizontal origin position, and transmits the detection result to the control unit 1b.

The first liquid level detection sensor 134 detects the value of the capacitance of the first reagent probe 23A, and transmits the detection result to the control unit 1b. The first probe collision detection sensor 135 detects that the first reagent probe 23A has come into contact with another equipment such as the first reagent container P4, and transmits the detection result to the control unit 1b.

The second vertical origin position detection sensor 141, the second horizontal origin position detection sensor 142, the second liquid level detection sensor 144, and a second probe collision detection sensor 145 of the first reagent dispensing unit 23 are electrically connected to the control unit 1b.

The second vertical origin position detection sensor 141 detects that the second drive shaft 121 is disposed at the vertical origin position, and transmits the detection result to the control unit 1b. The second horizontal origin position detection sensor 142 detects that the second drive shaft 121 is disposed at the horizontal origin position, and transmits the detection result to the control unit 1b.

The second liquid level detection sensor 144 detects the value of the capacitance of the first reagent probe 23B, and transmits the detection result to the control unit 1b. The second probe collision detection sensor 145 detects that the first reagent probe 23B has come into contact with another equipment such as the first reagent container P4, and transmits the detection result to the control unit 1b.

<Origin Position Return Processing>

The automatic analysis device 1 executes origin position return processing for the first reagent dispensing unit 23 and the second reagent dispensing unit 24 before starting an analysis operation (measurement operation). In the origin position return processing, the driving of the first vertical drive unit 112, the second vertical drive unit 122, the first rotation drive unit 113, and the second rotation drive unit 123 is controlled, and the first drive shaft 111 (the first support arm 114) and the second drive shaft 121 (the second support arm 124) are disposed at the origin positions (the vertical origin positions and the horizontal origin positions).

[First Example]

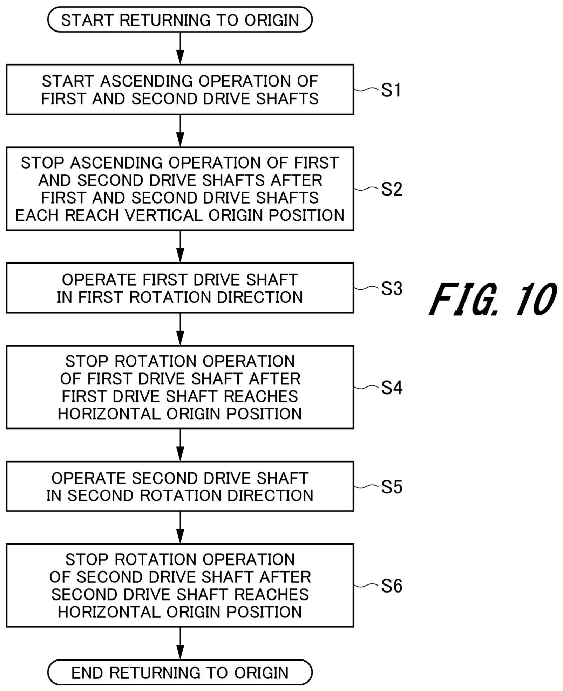

Next, a first example of the origin return processing for the first reagent dispensing unit 23 will be described with reference to FIG. 10.

FIG. 10 is a flowchart illustrating the first example of the origin return processing for the first reagent dispensing unit 23.

When the first example of the origin return processing is started, the control unit 1b controls the driving of the first vertical drive unit 112 and the second vertical drive unit 122 to cause the first drive shaft 111 and the second drive shaft 121 to ascend (S1). Next, after the first drive shaft 111 and the second drive shaft 121 each reach the vertical origin position, the control unit 1b stops the driving of the first vertical drive unit 112 and the second vertical drive unit 122 to stop the ascending operation of the first drive shaft 111 and the second drive shaft 121 (S2).

Next, the control unit 1b controls the driving of the first rotation drive unit 113 to rotate the first drive shaft 111 in the first rotation direction (S3). The first rotation direction is a counterclockwise direction in FIG. 1, and is a direction in which the first drive shaft 111 moves toward the horizontal origin position. Next, after the first drive shaft 111 reaches the horizontal origin position, the control unit 1b stops the driving the first rotation drive unit 113 and stops the rotation operation of the first drive shaft 111 (S4).

Next, the control unit 1b controls the driving of the second rotation drive unit 123 to rotate the second drive shaft 121 in the second rotation direction (S5). The second rotation direction is a clockwise direction in FIG. 1, and is a direction in which the second drive shaft 121 moves toward the horizontal origin position. Next, after the second drive shaft 121 reaches the horizontal origin position, the control unit 1b stops the driving of the second rotation drive unit 123 to stop the rotation operation of the second drive shaft 121 (S6). After the processing of step S6, the control unit 1b ends the first example of the origin return processing.

Steps S5 and S6 described above may be executed before steps S3 and S4. Step S5 described above may be executed simultaneously with step S3. As a result, a time required for the origin return processing can be shortened.

[Intersection between Two Dispensing Probes]

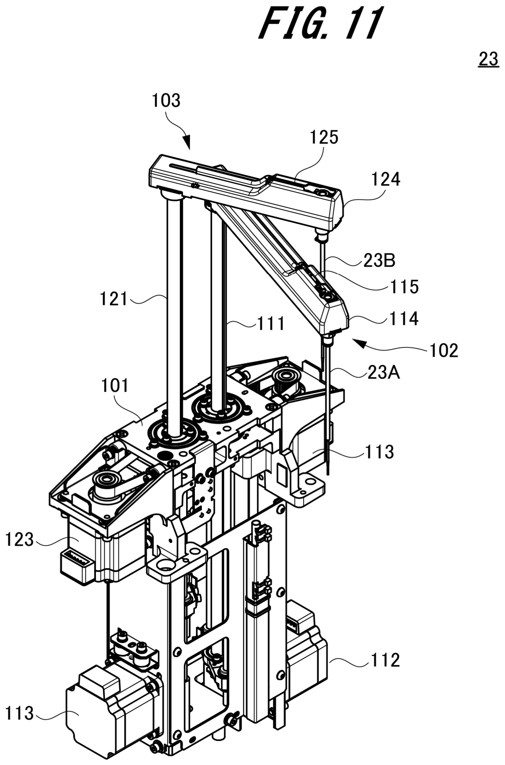

Next, a state in which the first support arm 114 and the second support arm 124 intersect each other will be described with reference to FIG. 11.

FIG. 11 is a perspective view illustrating a state in which the first support arm 114 and the second support arm 124 of the first reagent dispensing unit 23 intersect each other.

As described above, in the first reagent probes 23A and 23B, the fan shape having the arc formed by the trajectory of one end of the second support arm 124 in the longitudinal direction is included in the fan shape having the arc formed by the track of the second reagent probe 24A attached to the first support arm 114. Then, the first support arm 114 and the second support arm 124 rotate in the horizontal direction at positions where the first support arm 114 and the second support arm 124 do not come into contact with each other in the vertical direction. Therefore, when the first support arm 114 and the second support arm 124 during the dispensing operation are viewed from above, a middle portion of the first support arm 114 in the longitudinal direction and a middle portion of the second support arm 124 in the longitudinal direction do not intersect each other.

In maintenance, a user or a worker who performs maintenance and inspection may move the drive shafts 111 and 121 and the support arms 114 and 124. In this case, it is assumed that the first support arm 114 and the second support arm 124 are in a cross arrangement state in which the first support arm 114 and the second support arm 124 unintentionally cross each other. As illustrated in FIG. 11, in a case where the support arms 114 and 124 are in the cross arrangement state, the first support arm 114 is positioned below the second support arm 124.

In a case where the first example of the origin return processing described above is executed in the cross arrangement state, when the first drive shaft 111 and the second drive shaft 121 ascend in step S1, the second drive shaft 121 first reaches the vertical origin position and is stopped. Thereafter, the first drive shaft 111 continues to perform the ascend operation, but the first support arm 114 pushes up the second support arm 124 from below. That is, the first support arm 114 collides with the second support arm 124. The collision between the support arms 114 and 124 causes a device failure, and thus needs to be avoided.

[Second Example]

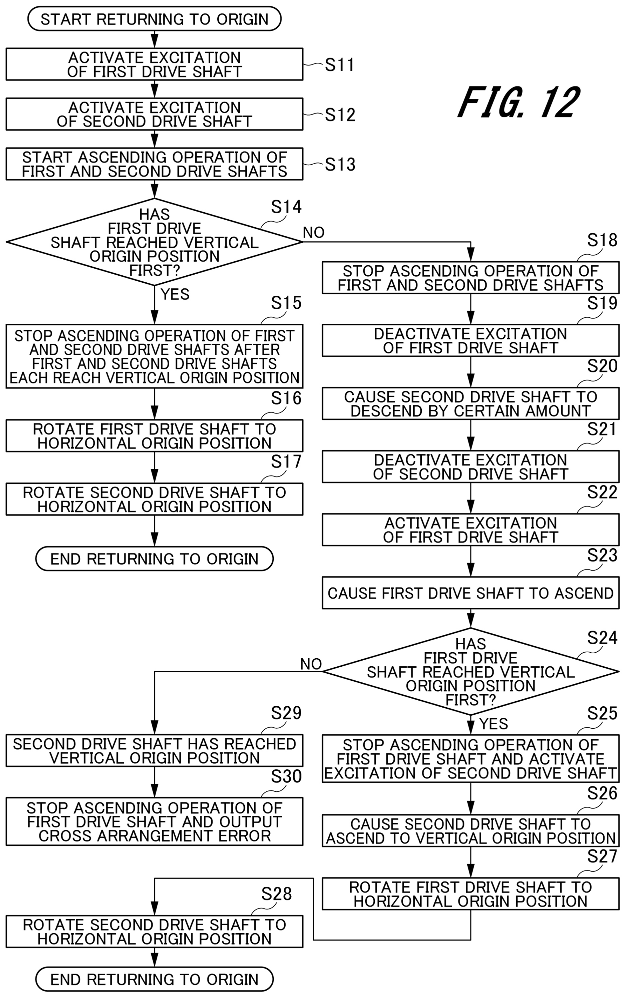

Next, a second example of the origin return processing for the first reagent dispensing unit 23 will be described with reference to FIG. 12.

FIG. 12 is a flowchart illustrating the second example of the origin return processing for the first reagent dispensing unit 23.

In the second example of the origin return processing, it is detected whether or not the first support arm 114 and the second support arm 124 are in the cross arrangement state. Then, in the second example of the origin return processing, an error is output in a case where the first support arm 114 and the second support arm 124 are in the cross arrangement state, and the first drive shaft 111 and the second drive shaft 121 are disposed at the origin positions in a case where the first support arm 114 and the second support arm 124 are not in the cross arrangement state.

When the second example of the origin return processing is started, the control unit 1b activates excitation of the first drive shaft 111 (S11). That is, the control unit 1b activates excitation of the first vertical drive unit 112 and the first rotation drive unit 113. Next, the control unit 1b activates excitation of the second drive shaft 121 (S12). That is, the control unit 1b activates excitation of the second vertical drive unit 122 and the second rotation drive unit 123.

Next, the control unit 1b controls the driving of the first vertical drive unit 112 and the second vertical drive unit 122 to cause the first drive shaft 111 and the second drive shaft 121 to ascend (S13). Next, the control unit 1b determines whether or not the first drive shaft 111 has reached the vertical origin position first (S14).

When it is determined in step S14 that the first drive shaft 111 has reached the vertical origin position first (YES in S14), the control unit 1b stops the driving of the first vertical drive unit 112 and the second vertical drive unit 122 after the first drive shaft 111 and the second drive shaft 121 each reach the vertical origin position to stop the ascending operation of the first drive shaft 111 and the second drive shaft 121 (S15).

In a case where the first drive shaft 111 reaches the vertical origin position first, the first support arm 114 is positioned above the second support arm 124. Therefore, even in a case where the second drive shaft 121 ascends after the ascending operation of the first drive shaft 111 is stopped, the second support arm 124 does not collide with the first support arm 114.

Next, the control unit 1b controls the driving of the first rotation drive unit 113 to rotate the first drive shaft 111 to the horizontal origin position (S16). Next, the control unit 1b controls the driving of the second rotation drive unit 123 to rotate the second drive shaft 121 to the horizontal origin position (S17). After the processing of step S17, the control unit 1b ends the second example of the origin return processing.

When it is determined in step S14 that the first drive shaft 111 has not reached the vertical origin position first (NO in S14), the control unit 1b stops the driving of the first vertical drive unit 112 and the second vertical drive unit 122 after the second drive shaft 121 reaches the vertical origin position to stop the ascending operation of the first drive shaft 111 and the second drive shaft 121 (S18).

Next, the control unit 1b deactivates the excitation of the first drive shaft 111 (S19). That is, the control unit 1b deactivates the excitation of the first vertical drive unit 112 and the first rotation drive unit 113. Next, the control unit 1b controls the driving of the second vertical drive unit 122 to cause the second drive shaft 121 to descend by a certain amount from the horizontal origin position (S20).

Next, the control unit 1b deactivates the excitation of the second drive shaft 121 (S21). That is, the control unit 1b deactivates the excitation of the second vertical drive unit 122 and the second rotation drive unit 123. Next, the control unit 1b activates the excitation of the first drive shaft 111 (S22). Subsequently, the control unit 1b controls the driving of the first vertical drive unit 112 to cause the first drive shaft 111 to ascend (S23).

Next, the control unit 1b determines whether or not the first drive shaft 111 has reached the vertical origin position first (S24). When it is determined in step S24 that the first drive shaft 111 has reached the vertical origin position first (YES in S24), the control unit 1b stops the driving of the first vertical drive unit 112 to stop the ascending operation of the first drive shaft 111, and activates the excitation of the second drive shaft 121 (S25). In a case where the first drive shaft 111 has reached the vertical origin position first, the first support arm 114 is positioned above the second support arm 124.

Next, the control unit 1b controls the driving of the second vertical drive unit 122 to cause the second drive shaft 121 to ascend to the vertical origin position (S26). Next, the control unit 1b controls the driving of the first rotation drive unit 113 to rotate the first drive shaft 111 to the horizontal origin position (S27). Next, the control unit 1b controls the driving of the second rotation drive unit 123 to rotate the second drive shaft 121 to the horizontal origin position (S28). After the processing of step S28, the control unit 1b ends the second example of the origin return processing.

When it is determined in step S24 that the first drive shaft 111 has not reached the vertical origin position first (NO in S24), the control unit 1b detects that the second drive shaft 121 has reached the vertical origin position (S29).

When the second drive shaft 121 whose excitation has been deactivated reaches the vertical origin position, the second support arm 124 attached to the second drive shaft 121 is pushed up by the first support arm 114. Therefore, the control unit 1b can detect the cross arrangement state in step S29.

The control unit 1b stops the driving of the first vertical drive unit 112 to stop the ascending operation of the first drive shaft 111, and outputs a cross arrangement error indicating the cross arrangement state to a display control unit (not illustrated) (S30). When the cross arrangement error is received, the display control unit displays the cross arrangement state on the display unit 41 (see FIG. 1). When the user or the worker who performs maintenance and inspection views the display unit 41 and recognizes the cross arrangement state, the user or the worker manually eliminates the cross arrangement state.

[Third Example]

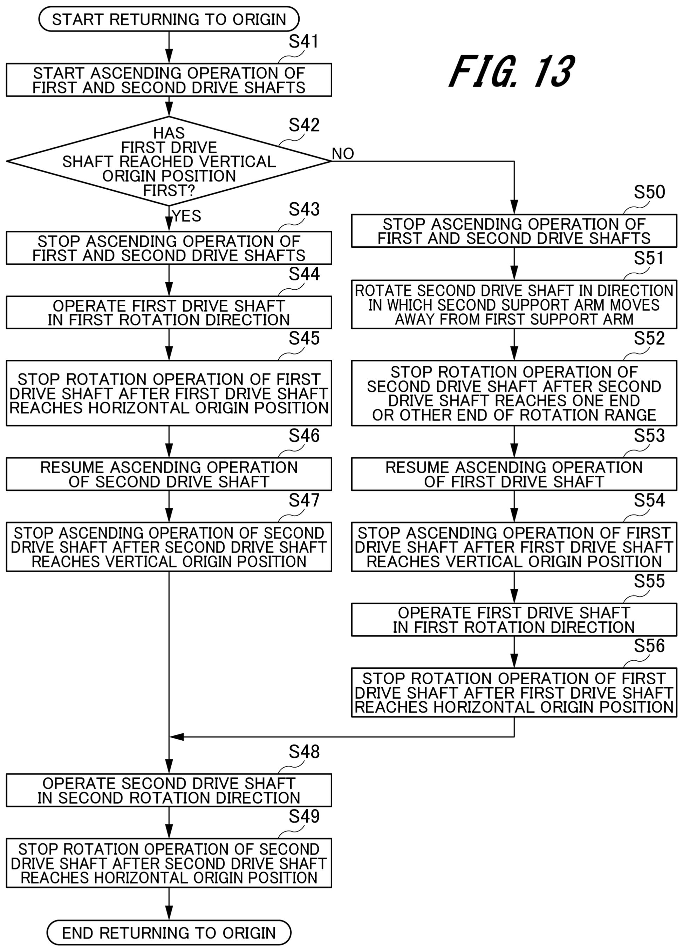

Next, a third example of the origin return processing for the first reagent dispensing unit 23 will be described with reference to FIG. 13.
FIG. 13 is a flowchart illustrating the third example of the origin return processing for the first reagent dispensing unit 23.
In the third example of the origin return processing, the cross arrangement state is eliminated, and the first drive shaft 111 and the second drive shaft 121 are returned to the origin positions. Therefore, in a case where the third example of the origin return processing is executed, at least setting of the rotation range of the second drive shaft 121 in the horizontal direction is released. As a result, the second drive shaft 121 is rotatable by 360°.
As described with reference to FIG. 3, in a case where the dispensing operation is performed, the second support arm 124 rotates in the fan shape having the arc formed by the track of the second reagent probe 24A attached to the first support arm 114. However, in a case where the cross arrangement state is eliminated, the second support arm 124 exceptionally moves out of the fan shape having the arc formed by the track of the second reagent probe 24A.
When the third example of the origin return processing is started, the control unit 1b controls the driving of the first vertical drive unit 112 and the second vertical drive unit 122 to cause the first drive shaft 111 and the second drive shaft 121 to ascend (S41). Next, the control unit 1b determines whether or not the first drive shaft 111 has reached the vertical origin position first (S42).
When it is determined in step S42 that the first drive shaft 111 has reached the vertical origin position first (YES in S42), the control unit 1b stops the driving of the first vertical drive unit 112 and the second vertical drive unit 122 to stop the ascending of the first drive shaft 111 and the second drive shaft 121 (S43).
In a case where the first drive shaft 111 reaches the vertical origin position first, the first support arm 114 is positioned above the second support arm 124. Therefore, even in a case where the first drive shaft 111 is rotated in the horizontal direction, the first support arm 114 does not collide with the second support arm 124.
Next, the control unit 1b controls the driving of the first rotation drive unit 113 to rotate the first drive shaft 111 in the first rotation direction (S44). The first rotation direction is a counterclockwise direction in FIG. 1, and is a direction in which the first drive shaft 111 moves toward the horizontal origin position. Next, after the first drive shaft 111 reaches the horizontal origin position, the control unit 1b stops the driving the first rotation drive unit 113 to stop the rotation operation of the first drive shaft 111 (S45).
Next, the control unit 1b controls the driving of the second vertical drive unit 122 to cause the second drive shaft 121 to ascend (S46). Next, after the second drive shaft 121 reaches the vertical origin position, the control unit 1b stops the driving of the second vertical drive unit 122 to stop the ascending operation of the second drive shaft 121 (S47).
Next, the control unit 1b controls the driving of the second rotation drive unit 123 to rotate the second drive shaft 121 in the second rotation direction (S48). The second rotation direction is a clockwise direction in FIG. 1, and is a direction in which the second drive shaft 121 moves toward the horizontal origin position. Next, after the second drive shaft 121 reaches the horizontal origin position, the control unit 1b stops the driving of the second rotation drive unit 123 to stop the rotation operation of the second drive shaft 121 (S49). After the processing of step S19, the control unit 1b ends the third example of the origin return processing.
When it is determined in step S42 that the first drive shaft 111 has not reached the vertical origin position first (NO in S42), the control unit 1b stops the driving of the first vertical drive unit 112 and the second vertical drive unit 122 to stop the ascending of the first drive shaft 111 and the second drive shaft 121 (S50).
Next, the control unit 1b controls the driving of the second rotation drive unit 123 to rotate the second drive shaft 121 in a direction in which the first reagent probe 23B of the second support arm 124 moves away from the first support arm 114 (S51).
In step S51, in a case where the first reagent probe 23B of the second support arm 124 is positioned closer to one end of the rotation range than the first support arm 114, the control unit 1b rotates the second drive shaft 121 (the second support arm 124) toward one end of the rotation range. Then, the control unit 1b rotates the second drive shaft 121 until reaching the other end of the rotation range beyond one end of the rotation range. As a result, the first reagent probe 23B rotates around an end portion of the first support arm 114 that is adjacent to the rotation center, and the second support arm 124 moves away from the first support arm 114. As a result, the cross arrangement state is eliminated.
In step S51, in a case where the first reagent probe 23B of the second support arm 124 is positioned closer to the other end of the rotation range than the first support arm 114, the control unit 1b rotates the second drive shaft 121 (the second support arm 124) toward the other end of the rotation range. Then, the control unit 1b rotates the second drive shaft 121 until reaching one end of the rotation range beyond the other end of the rotation range. As a result, the first reagent probe 23B rotates around the end portion of the first support arm 114 that is adjacent to the rotation center, and the second support arm 124 moves away from the first support arm 114. As a result, the cross arrangement state is eliminated.

Next, after the second drive shaft 121 reaches one end or the other end of the rotation range, the control unit 1b stops the driving of the second rotation drive unit 123 to stop the rotation operation of the second drive shaft 121 (S52). Next, the control unit 1b controls the driving of first vertical drive unit 112 to cause the first drive shaft 111 to ascend (S53). Next, after the first drive shaft 111 reaches the vertical origin position, the control unit 1b stops the driving of the first vertical drive unit 112 to stop the ascending operation of the first drive shaft 111 (S54).

Next, the control unit 1b controls the driving of the first rotation drive unit 113 to rotate the first drive shaft 111 in the first rotation direction (S55). Next, after the first drive shaft 111 reaches the horizontal origin position, the control unit 1b stops the driving of the first rotation drive unit 113 to stop the rotation operation of the first drive shaft 111 (S56). After the processing of step S56, the control unit 1b proceeds to the processing of step S48.

Cables and tubes pass through the inside of the drive shafts 111 and 121. Therefore, after the cross arrangement state is eliminated, it is preferable to eliminate twisting of the cables in the second drive shaft 121. Therefore, after the execution of the third example of the origin return processing, the second drive shaft 121 is rotated once again in the opposite direction to eliminate the twisting of the cables.

In the second example of the origin return processing described above (see FIG. 12), the cross arrangement error is output to the display control unit (not illustrated) in step S30. However, after the processing of step S29, steps S51 to S58, step S48, and step S49 in the third example of the origin return processing may be executed. As a result, the first reagent dispensing unit 23 can eliminate the cross arrangement state and return the first drive shaft 111 and the second drive shaft 121 to the origin positions.

2. Second embodiment

<Configuration of Automatic Analysis Device>

A configuration of an automatic analysis device according to a second embodiment is different from the configuration of the automatic analysis device according to the first embodiment in an origin position detection mechanism. Therefore, here, the origin position detection mechanism according to the second embodiment will be described with reference to FIGS. 14 to 16, and a description of the configuration that overlaps with that of the first embodiment will be omitted.

<Origin Position Detection Mechanism>

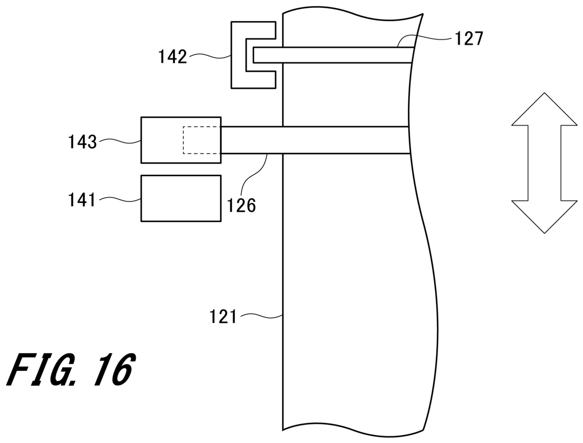

FIG. 14 is a diagram illustrating the origin position detection mechanism of a first reagent dispensing unit 23. FIG. 15 is an explanatory diagram illustrating a state in which a second drive shaft 121 is disposed at a vertical origin position. FIG. 16 is an explanatory diagram illustrating the second drive shaft 121 in a case where support arms 114 and 124 are in a cross arrangement state.

The origin position detection mechanism of a first drive shaft 111 according to the second embodiment is the same as the origin position detection mechanism of the first drive shaft 111 according to the first embodiment. That is, the origin position detection mechanism of the first drive shaft 111 according to the second embodiment includes a first vertical origin position detection sensor 131, a first horizontal origin position detection sensor 132, a vertical origin detected portion 116, and a rotation origin detected portion 117 (see FIG. 7).

As illustrated in FIG. 14, the origin position detection mechanism of the second drive shaft 121 according to the second embodiment includes a second vertical origin position detection sensor 141, a second horizontal origin position detection sensor 142, a cross-check sensor 143, a vertical origin detected portion 126, and a rotation origin detected portion 127. The second vertical origin position detection sensor 141, the second horizontal origin position detection sensor 142, the vertical origin detected portion 126, and the rotation origin detected portion 127 are the same as those in the first embodiment.

As illustrated in FIG. 15, the second vertical origin position detection sensor 141 detects that the second drive shaft 121 is disposed at the vertical origin position when an optical axis of the second vertical origin position detection sensor 141 is blocked by the vertical origin detected portion 126. Further, the second horizontal origin position detection sensor 142 detects that the second drive shaft 121 is disposed at a horizontal origin position when an optical axis of the second horizontal origin position detection sensor 142 passes through a slit of the rotation origin detected portion 127.

The cross-check sensor 143 is held by a sensor holding plate 140 (see FIG. 2) together with the second vertical origin position detection sensor 141 and the second horizontal origin position detection sensor 142. The vertical origin detected portion 126 is disposed at a position facing the second vertical origin position detection sensor 141 and the cross-check sensor 143 in a vertical direction.

The cross-check sensor 143 is, for example, a transmissive photosensor. An optical axis of the cross-check sensor 143 extends in a horizontal direction. As illustrated in FIG. 16, the cross-check sensor 143 detects that the second drive shaft 121 is disposed at a cross-check position when the optical axis of the cross-check sensor 143 is blocked by the vertical origin detected portion 126. The cross-check position is set above the vertical origin position. The second drive shaft 121 is disposed at the cross-check position in a case where the second support arm 124 is pushed up by the first support arm 114.

<Control System of First Reagent Dispensing Unit 23>

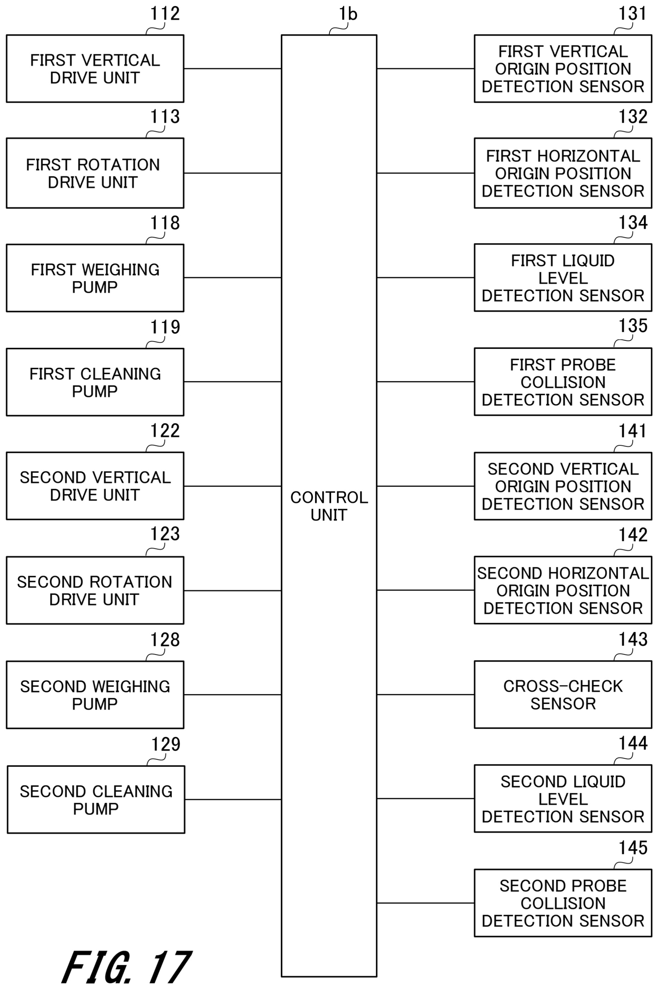

Next, a configuration example of a control system of the first reagent dispensing unit 23 according to the second embodiment will be described with reference to FIG. 17.

FIG. 17 is a block diagram illustrating the configuration example of the control system of the first reagent dispensing unit 23 according to the second embodiment.

The configuration of the control system of the first reagent dispensing unit 23 according to the second embodiment is obtained by adding the cross-check sensor 143 to the configuration of the control system of the first reagent dispensing unit 23 according to the first embodiment. The cross-check sensor 143 detects that the second drive shaft 121 is disposed at the cross-check position, and transmits the detection result to a control unit 1b.

<Origin Position Return Processing>

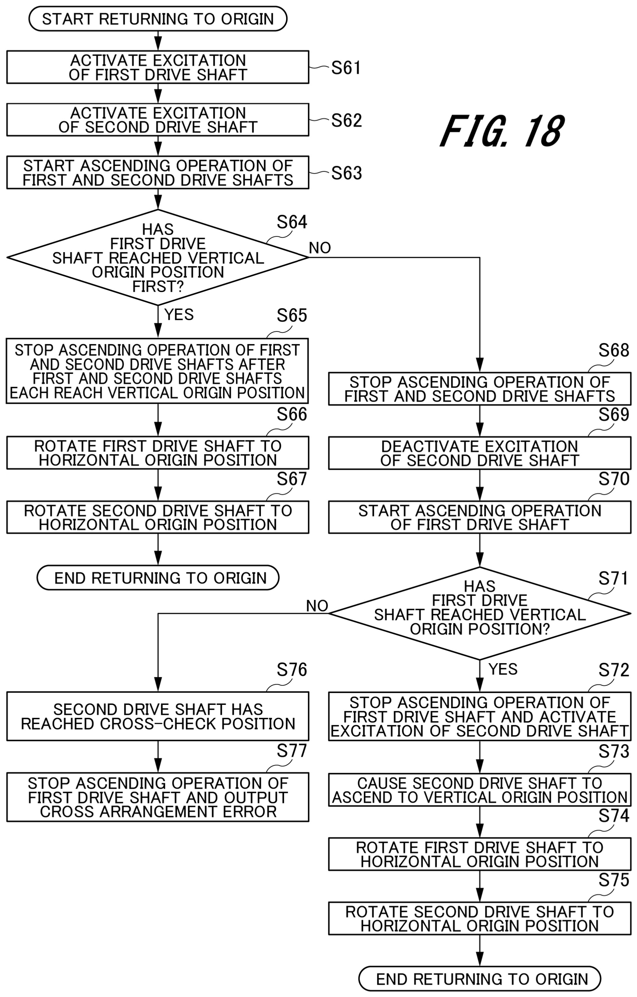

Next, origin return processing for the first reagent dispensing unit 23 according to the second embodiment will be described with reference to FIG. 18.

FIG. 18 is a flowchart illustrating an example of the origin return processing for the first reagent dispensing unit 23 according to the second embodiment.

In the origin return processing for the first reagent dispensing unit 23 according to the second embodiment, it is detected whether or not the first support arm 114 and the second support arm 124 are in the cross arrangement state, and an error is output in a case where the first support arm 114 and the second support arm 124 are in the cross arrangement state. In a case where the first support arm 114 and the second support arm 124 are not in the cross arrangement state, the first drive shaft 111 and the second drive shaft 121 are disposed at the origin positions.

When the origin return processing according to the second embodiment is started, the control unit 1b activates excitation of the first drive shaft 111 (S61). That is, the control unit 1b activates excitation of a first vertical drive unit 112 and a first rotation drive unit 113. Next, the control unit 1b activates excitation of the second drive shaft 121 (S62). That is, the control unit 1b activates excitation of a second vertical drive unit 122 and a second rotation drive unit 123.

Next, the control unit 1b controls driving of the first vertical drive unit 112 and the second vertical drive unit 122 to cause the first drive shaft 111 and the second drive shaft 121 ascend (S63). Next, the control unit 1b determines whether or not the first drive shaft 111 has reached a vertical origin position first (S64).

When it is determined in step S64 that the first drive shaft 111 has reached the vertical origin position first (YES in S64), the control unit 1b stops the driving of the first vertical drive unit 112 and the second vertical drive unit 122 after the first drive shaft 111 and the second drive shaft 121 each reach the vertical origin position to stop the ascending operation of the first drive shaft 111 and the second drive shaft 121 (S65).

Next, the control unit 1b controls driving of the first rotation drive unit 113 to rotate the first drive shaft 111 to a horizontal origin position (S66). Next, the control unit 1b controls driving of the second rotation drive unit 123 to rotate the second drive shaft 121 to the horizontal origin position (S67). After the processing of step S67, the control unit 1b ends the origin return processing according to the second embodiment.

When it is determined in step S64 that the first drive shaft 111 has not reached the vertical origin position first (NO in S64), the control unit 1b stops the driving of the first vertical drive unit 112 and the second vertical drive unit 122 after the second drive shaft 121 reaches the vertical origin position to stop the ascending operation of the first drive shaft 111 and the second drive shaft 121 (S68).

Next, the control unit 1b deactivates the excitation of the second drive shaft 121 (S69). That is, the control unit 1b deactivates the excitation of the second vertical drive unit 122 and the second rotation drive unit 123. Next, the control unit 1b controls the driving of the first vertical drive unit 112 to cause the first drive shaft 111 to ascend (S70).

Next, the control unit 1b determines whether or not the first drive shaft 111 has reached the vertical origin position first (S71). When it is determined in step S71 that the first drive shaft 111 has reached the vertical origin position first (YES in S71), the control unit 1b stops the driving of the first vertical drive unit 112 to stop the ascending operation of the first drive shaft 111, and activates the excitation of the second drive shaft 121 (S72). In a case where the first drive shaft 111 has reached the vertical origin position first, the first support arm 114 is positioned above the second support arm 124.

Next, the control unit 1b controls the driving of the second vertical drive unit 122 to cause the second drive shaft 121 to ascend to the vertical origin position (S73). Next, the control unit 1b controls the driving of the first rotation drive unit 113 to rotate the first drive shaft 111 to the horizontal origin position (S74). Next, the control unit 1b controls the driving of the second rotation drive unit 123 to rotate the second drive shaft 121 to the horizontal origin position (S75). After the processing of step S75, the control unit 1b ends the origin return processing according to the second embodiment.

When it is determined in step S71 that the first drive shaft 111 has not reached the vertical origin position first (NO in S71), the control unit 1b detects that the second drive shaft 121 has reached the cross-check position (S76).

When the second drive shaft 121 whose excitation has been deactivated reaches the cross-check position, the second support arm 124 attached to the second drive shaft 121 is pushed up by the first support arm 114. Therefore, the control unit 1b can detect the cross arrangement state in step S76.

The control unit 1b stops the driving of the first vertical drive unit 112 to stop the ascending operation of the first drive shaft 111, and outputs a cross arrangement error indicating the cross arrangement state to a display control unit (not illustrated) (S77). When the cross arrangement error is received, the display control unit displays the cross arrangement state on a display unit 41 (see FIG. 1). When a user or a worker who performs maintenance and inspection views the display unit 41 and recognizes the cross arrangement state, the user or the worker manually eliminates the cross arrangement state.

In the origin return processing according to the second embodiment described above, the cross arrangement error is output to the display control unit (not illustrated) in step S77. However, after the processing of step S76, steps S51 to S58, step S48, and step S49 in the third example of the origin return processing according to the first embodiment may be executed. As a result, the first reagent dispensing unit 23 can eliminate the cross arrangement state and return the first drive shaft 111 and the second drive shaft 121 to the origin positions.

The embodiments of the present invention have been described above. However, the present invention is not limited to the above-described embodiments, and various modifications can be made without departing from the gist of the invention described in the claims. For example, the above-described embodiments describe the present invention in detail in an easy-to-understand manner, and the present invention is not necessarily limited to those having all the described configurations. In addition, a part of the configuration of a certain embodiment can be replaced with the configuration of another embodiment, and the configuration of another embodiment can be added to the configuration of a certain embodiment. In addition, it is possible to add, delete, and replace other configurations for a part of the configuration of each embodiment.

In the first and second embodiments described above, the positions of the probe cleaning devices 34A and 34B in the horizontal direction are set on the tracks of the second reagent probes 24A and 24B and within the rotation ranges of the second reagent probes 24A and 24B (the drive shafts 111 and 121). However, the probe cleaning device for cleaning the probe of the dispensing probe device according to the present invention may be set outside the rotation range related to the dispensing operation of the probe as long as the probe cleaning device is positioned on the track of the probe.

The following numbered clauses provided further embodiments of the invention:

Clause 1. A dispensing probe device including a first dispensing probe (23A) and a second dispensing probe (23B) extending in a vertical direction, the dispensing probe device comprising: a first support arm (114) configured to support an upper end of the first dispensing probe (23A); a first drive mechanism configured to move the first support arm (114) in the vertical direction and rotate the first support arm (114) in a horizontal direction; a second support arm (124) configured to support an upper end of the second dispensing probe (23B); and a second drive mechanism configured to move the second support arm (124) in the vertical direction and rotate the second support arm (124) in the horizontal direction, wherein a distance from a rotation center of the first support arm (114) to the first dispensing probe (23A) in the horizontal direction is longer than a distance from a rotation center of the second support arm (124) to the second dispensing probe (23B) in the horizontal direction, and a fan shape having an arc formed by a trajectory of one end of the second support arm (124) that is far from the rotation center of the second support arm (124) is included in a fan shape having an arc formed by a track of the first dispensing probe (23A).

Clause 2. The dispensing probe device according to clause 1, wherein a first rotation height is larger than a second rotation height, the first rotation height being a position of the first support arm (114) in the vertical direction when the first support arm (114) is rotated in the horizontal direction, and the second rotation height being a position of the second support arm (124) in the vertical direction when the second support arm (124) is rotated in the horizontal direction, and the first support arm (114) positioned at the first rotation height does not come into contact with the second support arm (124) positioned at the second rotation height.

Clause 3. The dispensing probe device according to clause 2, wherein the first dispensing probe (23A) is cleaned by being moved upward and downward in a cleaning tank of a first probe cleaning device (34A) disposed on a track, the second dispensing probe (23B) is cleaned by being moved upward and downward in a cleaning tank of a second probe cleaning device (34B) disposed on a track, and a distance between the first support arm (114) positioned at the first rotation height and the second support arm (124) positioned at the second rotation height in the vertical direction is set to a distance at which the first support arm (114) when cleaning the first dispensing probe (23A) and the second support arm (124) when cleaning the second dispensing probe (23B) do not interfere with each other.

Clause 4. The dispensing probe device according to clause 3, wherein a difference in position between the first probe cleaning device (34A) and the second probe cleaning device (34B) in the vertical direction is equal to the distance between the first support arm (114) positioned at the first rotation height and the second support arm (124) positioned at the second rotation height in the vertical direction.

Clause 5. The dispensing probe device according to any preceding clause, wherein the first dispensing probe (23A) and the second dispensing probe (23B) suck a liquid in a plurality of first containers (P4) held on a first turntable (4) rotating in the horizontal direction and discharge the liquid into a plurality of second containers (P6) held on a second turntable (6) rotating in the horizontal direction, and the rotation center of the first support arm (114) and the rotation center of the second support arm (124) are disposed on a perpendicular line substantially perpendicular to a virtual line connecting a rotation center of the first turntable (4) and a rotation center of the second turntable (6).

Clause 6. The dispensing probe device according to clause 5, wherein the perpendicular line is disposed at a position where both ends of rotation ranges of the first support arm (114) and the second support arm (124) and a line connecting the rotation centers of the first support arm (114) and the second support arm (124) form an isosceles triangle.

Clause 7. The dispensing probe device according to any preceding clause, wherein a first support arm clearance area is set above a second support arm clearance area, the first support arm clearance area being an area in air occupied by the first support arm (114) during rotational movement, and the second support arm clearance area being an area in air occupied by the second support arm (124) during rotational movement.

Clause 8. An automatic analysis device comprising: a containing unit (4) including a plurality of containers containing a liquid; a dispensing probe device (23) configured to dispense the liquid; and a measuring unit (15) configured to measure the liquid dispensed by the dispensing probe device (23), wherein the dispensing probe device (23) includes: a first dispensing probe (23A) and a second dispensing probe (23B) extending in a vertical direction; a first support arm (114) configured to support an upper end of the first dispensing probe (23A); a first drive mechanism configured to move the first support arm (114) in the vertical direction and rotate the first support arm (114) in a horizontal direction; a second support arm (124) configured to support an upper end of the second dispensing probe (23B); and a second drive mechanism configured to move the second support arm (124) in the vertical direction and rotate the second support arm (124) in the horizontal direction, a distance from a rotation center of the first support arm (114) to the first dispensing probe (23A) in the horizontal direction is longer than a distance from a rotation center of the second support arm (124) to the second dispensing probe (23B) in the horizontal direction, and a fan shape having an arc formed by a trajectory of one end of the second support arm (124) that is far from the rotation center of the second support arm (124) is included in a fan shape having an arc formed by a track of the first dispensing probe (23A).

Clause 9. The automatic analysis device according to clause 8, further comprising a control unit (1b) configured to control driving of the first drive mechanism and the second drive mechanism, wherein the control unit (1b) executes origin return processing of disposing the first support arm (114) and the second support arm (124) at respective origin positions, and the origin position of the first support arm (114) in the vertical direction is higher than the origin position of the second support arm (124) in the vertical direction.

Clause 10. The automatic analysis device according to clause 9, wherein in the origin return processing, the first support arm (114) is disposed at the origin position in the horizontal direction after the first support arm (114) is disposed at the origin position in the vertical direction, and the second support arm (124) is disposed at the origin position in the horizontal direction after the second support arm (124) is disposed at the origin position in the vertical direction.

Clause 11. The automatic analysis device according to clause 10, wherein the dispensing probe device (23) further includes a cross-check sensor (143) configured to detect a cross arrangement state in which the first support arm (114) is positioned below the second support arm (124) and the first support arm (114) and the second support arm (124) intersect each other when viewed from above.

Reference Signs List

| | |
|---|---|
| 1 | Automatic analysis device |
| 1a | Measurement unit |
| 1b | Control unit |
| 2 | Sample turntable |
| 3 | Dilution turntable |
| 4 | First reagent turntable |
| 5 | Second reagent turntable |
| 6 | Reaction turntable |
| 11 | Dilution stirring device |
| 12 | Dilution cleaning device |
| 13 | First reaction stirring device |

| | |
|---|---|
| 14 | Second reaction stirring device |
| 15 | Multi-wavelength photometer |
| 16 | Reaction container cleaning device |
| 21 | Specimen dispensing unit |
| 22 | Diluted specimen dispensing unit |
| 23 | First reagent dispensing unit |
| 23A | First reagent probe |
| 23B | First reagent probe |
| 24 | Second reagent dispensing unit |
| 24A | Second reagent probe |
| 24B | Second reagent probe |
| 31, 32A, 32B, 33A, 33B, 34A, 34B | Probe cleaning device |
| 101 | Base |
| 102 | First dispensing mechanism |
| 103 | Second dispensing mechanism |
| 111 | First drive shaft |
| 112 | First vertical drive unit |
| 113 | First rotation drive unit |
| 114 | First support arm |
| 116 | Detected portion |
| 116a | Fitting hole |
| 116b | Notch |
| 118 | First weighing pump |
| 119 | First cleaning pump |
| 121 | Second drive shaft |
| 122 | Second vertical drive unit |
| 123 | Second rotation drive unit |
| 124 | Second support arm |
| 128 | Second weighing pump |
| 129 | Second cleaning pump |
| 131 | First vertical origin position detection sensor |
| 132 | First horizontal origin position detection sensor |
| 134 | First liquid level detection sensor |
| 135 | First probe collision detection sensor |
| 141 | Second vertical origin position detection sensor |
| 142 | Second horizontal origin position detection sensor |
| 143 | Cross-check sensor |
| 144 | Second liquid level detection sensor |
| 145 | Second probe collision detection sensor |
| 201 | First support arm clearance area |
| 202 | Probe A clearance area |
| 211 | Second support arm clearance area |
| 212 | Probe B clearance area |

**Claims**

1. An automatic analysis device comprising:

a containing unit (4) including a plurality of containers containing a liquid;
a dispensing probe device (23) configured to dispense the liquid; and
a measuring unit (15) configured to measure the liquid dispensed by the dispensing probe device (23), wherein,
the dispensing probe device including a first dispensing probe (23A) and a second dispensing probe (23B) extending in a vertical direction, the dispensing probe device further comprising:

a first support arm (114) configured to support an upper end of the first dispensing probe (23A);
a first drive mechanism configured to move the first support arm (114) in the vertical direction and rotate the first support arm (114) in a horizontal direction;
a second support arm (124) configured to support an upper end of the second dispensing probe (23B); and

a second drive mechanism configured to move the second support arm (124) in the vertical direction and rotate the second support arm (124) in the horizontal direction, wherein

a distance from a rotation center of the first support arm (114) to the first dispensing probe (23A) in the horizontal direction is longer than a distance from a rotation center of the second support arm (124) to the second dispensing probe (23B) in the horizontal direction,

a fan shape having an arc formed by a trajectory of one end of the second support arm (124) that is far from the rotation center of the second support arm (124) is included in a fan shape having an arc formed by a track of the first dispensing probe (23A),

a first rotation height is larger than a second rotation height, the first rotation height being a position of the first support arm (114) in the vertical direction when the first support arm (114) is rotated in the horizontal direction, and the second rotation height being a position of the second support arm (124) in the vertical direction when the second support arm (124) is rotated in the horizontal direction,

the first support arm (114) positioned at the first rotation height does not come into contact with the second support arm (124) positioned at the second rotation height, and

a difference in position between the first probe cleaning device (34A) and the second probe cleaning device (34B) in the vertical direction is equal to the distance between the first support arm (114) positioned at the first rotation height and the second support arm (124) positioned at the second rotation height in the vertical direction.

2. The automatic analysis device according to claim 1, wherein

the first dispensing probe (23A) is cleaned by being moved upward and downward in a cleaning tank of a first probe cleaning device (34A) disposed on a track,

the second dispensing probe (23B) is cleaned by being moved upward and downward in a cleaning tank of a second probe cleaning device (34B) disposed on a track, and

a distance between the first support arm (114) positioned at the first rotation height and the second support arm (124) positioned at the second rotation height in the vertical direction is set to a distance at which the first support arm (114) when cleaning the first dispensing probe (23A) and the second support arm (124) when cleaning the second dispensing probe (23B) do not interfere with each other.

3. The automatic analysis device according to any preceding claim, wherein a first support arm clearance area is set above a second support arm clearance area, the first support arm clearance area being an area in air occupied by the first support arm (114) during rotational movement, and the second support arm clearance area being an area in air occupied by the second support arm (124) during rotational movement.

4. The automatic analysis device according to claim 1, further comprising a control unit (1b) configured to control driving of the first drive mechanism and the second drive mechanism, wherein

the control unit (1b) executes origin return processing of disposing the first support arm (114) and the second support arm (124) at respective origin positions, and

the origin position of the first support arm (114) in the vertical direction is higher than the origin position of the second support arm (124) in the vertical direction.

5. The automatic analysis device according to claim 4, wherein in the origin return processing, the first support arm (114) is disposed at the origin position in the horizontal direction after the first support arm (114) is disposed at the origin position in the vertical direction, and the second support arm (124) is disposed at the origin position in the horizontal direction after the second support arm (124) is disposed at the origin position in the vertical direction.

6. The automatic analysis device according to claim 5, wherein the dispensing probe device (23) further includes a cross-check sensor (143) configured to detect a cross arrangement state in which the first support arm (114) is positioned below the second support arm (124) and the first support arm (114) and the second support arm (124) intersect each other when viewed from above.

EP 4 685 496 A2

FIG. 1

25

23

103
125
102
115
23B
124
114
23A
121
111
130
101
113
123
140
112
122

**FIG. 2**

**FIG. 3**

FIG. 4

# FIG. 5

# FIG. 6

*FIG. 7*

132

131

116

117

111

*FIG. 8*

117b

117

117a

# FIG. 9

| 112 | | 1b | | 131 |
|---|---|---|---|---|

```
┌─────────────────┐                              ┌─────────────────────┐
│  FIRST VERTICAL  │─────┐            ┌──────────│   FIRST VERTICAL    │
│   DRIVE UNIT     │     │            │          │  ORIGIN POSITION    │
└─────────────────┘      │            │          │  DETECTION SENSOR   │
                         │            │          └─────────────────────┘
┌─────────────────┐      │            │          ┌─────────────────────┐
│  FIRST ROTATION  │─────┤            │          │  FIRST HORIZONTAL   │
│   DRIVE UNIT     │     │            │          │  ORIGIN POSITION    │
└─────────────────┘      │            │          │  DETECTION SENSOR   │
                         │            │          └─────────────────────┘
┌─────────────────┐      │  ┌──────┐  │          ┌─────────────────────┐
│  FIRST WEIGHING  │─────┤  │      │  │          │   FIRST LIQUID      │
│     PUMP         │     │  │      │  │          │     LEVEL           │
└─────────────────┘      │  │      │  │          │  DETECTION SENSOR   │
                         │  │CONTROL│ │          └─────────────────────┘
┌─────────────────┐      │  │ UNIT │  │          ┌─────────────────────┐
│  FIRST CLEANING  │─────┤  │      │  │          │   FIRST PROBE       │
│     PUMP         │     │  │      │  │          │   COLLISION         │
└─────────────────┘      │  │      │  │          │  DETECTION SENSOR   │
...
```

FIRST VERTICAL DRIVE UNIT — 112

FIRST ROTATION DRIVE UNIT — 113

FIRST WEIGHING PUMP — 118

FIRST CLEANING PUMP — 119

SECOND VERTICAL DRIVE UNIT — 122

SECOND ROTATION DRIVE UNIT — 123

SECOND WEIGHING PUMP — 128

SECOND CLEANING PUMP — 129

CONTROL UNIT — 1b

FIRST VERTICAL ORIGIN POSITION DETECTION SENSOR — 131

FIRST HORIZONTAL ORIGIN POSITION DETECTION SENSOR — 132

FIRST LIQUID LEVEL DETECTION SENSOR — 134

FIRST PROBE COLLISION DETECTION SENSOR — 135

SECOND VERTICAL ORIGIN POSITION DETECTION SENSOR — 141

SECOND HORIZONTAL ORIGIN POSITION DETECTION SENSOR — 142

SECOND LIQUID LEVEL DETECTION SENSOR — 144

SECOND PROBE COLLISION DETECTION SENSOR — 145

START RETURNING TO ORIGIN

START ASCENDING OPERATION OF
FIRST AND SECOND DRIVE SHAFTS — S1

STOP ASCENDING OPERATION OF FIRST
AND SECOND DRIVE SHAFTS AFTER
FIRST AND SECOND DRIVE SHAFTS
EACH REACH VERTICAL ORIGIN POSITION — S2

OPERATE FIRST DRIVE SHAFT
IN FIRST ROTATION DIRECTION — S3

STOP ROTATION OPERATION
OF FIRST DRIVE SHAFT AFTER
FIRST DRIVE SHAFT REACHES
HORIZONTAL ORIGIN POSITION — S4

OPERATE SECOND DRIVE SHAFT
IN SECOND ROTATION DIRECTION — S5

STOP ROTATION OPERATION
OF SECOND DRIVE SHAFT AFTER
SECOND DRIVE SHAFT REACHES
HORIZONTAL ORIGIN POSITION — S6

END RETURNING TO ORIGIN

*FIG. 10*

# FIG. 11

**FIG. 12**

```
        ( START RETURNING TO ORIGIN )
                    │
    ┌───────────────────────────────┐
    │   ACTIVATE EXCITATION         │── S11
    │   OF FIRST DRIVE SHAFT        │
    └───────────────────────────────┘
                    │
    ┌───────────────────────────────┐
    │   ACTIVATE EXCITATION         │── S12
    │   OF SECOND DRIVE SHAFT       │
    └───────────────────────────────┘
                    │
    ┌───────────────────────────────┐
    │ START ASCENDING OPERATION OF  │── S13
    │ FIRST AND SECOND DRIVE SHAFTS │
    └───────────────────────────────┘
                    │
              S14  ╱◇╲
                  HAS                          NO        ┌───────────────────────────────┐
             FIRST DRIVE  ──────────────────────────────▶│ STOP ASCENDING OPERATION OF   │── S18
        SHAFT REACHED VERTICAL                           │ FIRST AND SECOND DRIVE SHAFTS │
          ORIGIN POSITION                                └───────────────────────────────┘
              FIRST?                                                   │
                    │ YES                                 ┌───────────────────────────────┐
                    │                                     │   DEACTIVATE EXCITATION       │── S19
    ┌───────────────────────────────┐ S15                 │   OF FIRST DRIVE SHAFT        │
    │ STOP ASCENDING OPERATION OF   │                     └───────────────────────────────┘
    │ FIRST AND SECOND DRIVE SHAFTS │                                  │
    │ AFTER FIRST AND SECOND DRIVE  │                     ┌───────────────────────────────┐
    │ SHAFTS EACH REACH VERTICAL    │                     │ CAUSE SECOND DRIVE SHAFT TO   │── S20
    │ ORIGIN POSITION               │                     │ DESCEND BY CERTAIN AMOUNT     │
    └───────────────────────────────┘                     └───────────────────────────────┘
                    │ S16                                               │
    ┌───────────────────────────────┐                     ┌───────────────────────────────┐
    │ ROTATE FIRST DRIVE SHAFT TO   │                     │   DEACTIVATE EXCITATION       │── S21
    │ HORIZONTAL ORIGIN POSITION    │                     │   OF SECOND DRIVE SHAFT       │
    └───────────────────────────────┘                     └───────────────────────────────┘
                    │ S17                                               │
    ┌───────────────────────────────┐                     ┌───────────────────────────────┐
    │ ROTATE SECOND DRIVE SHAFT TO  │                     │   ACTIVATE EXCITATION         │── S22
    │ HORIZONTAL ORIGIN POSITION    │                     │   OF FIRST DRIVE SHAFT        │
    └───────────────────────────────┘                     └───────────────────────────────┘
                    │                                                  │
      ( END RETURNING TO ORIGIN )                        ┌───────────────────────────────┐
                                                         │ CAUSE FIRST DRIVE SHAFT TO    │── S23
                                                         │ ASCEND                        │
                                                         └───────────────────────────────┘
                                                                       │
                                                               S24  ╱◇╲
                                          NO                        HAS
                          ┌──────────────────────────────     FIRST DRIVE
                          │                              SHAFT REACHED VERTICAL
                          │                                ORIGIN POSITION
                          │                                    FIRST?
                          │                                       │ YES
    ┌───────────────────────────────┐ S29      ┌───────────────────────────────┐ S25
    │ SECOND DRIVE SHAFT HAS        │          │ STOP ASCENDING OPERATION OF   │
    │ REACHED VERTICAL ORIGIN       │          │ FIRST DRIVE SHAFT AND ACTIVATE│
    │ POSITION                      │          │ EXCITATION OF SECOND DRIVE    │
    └───────────────────────────────┘          │ SHAFT                         │
                    │ S30                       └───────────────────────────────┘
    ┌───────────────────────────────┐                        │ S26
    │ STOP ASCENDING OPERATION OF   │          ┌───────────────────────────────┐
    │ FIRST DRIVE SHAFT AND OUTPUT  │          │ CAUSE SECOND DRIVE SHAFT TO   │
    │ CROSS ARRANGEMENT ERROR       │          │ ASCEND TO VERTICAL ORIGIN     │
    └───────────────────────────────┘          │ POSITION                      │
                    │                           └───────────────────────────────┘
                    │ S28                                    │ S27
    ┌───────────────────────────────┐          ┌───────────────────────────────┐
    │ ROTATE SECOND DRIVE SHAFT TO  │          │ ROTATE FIRST DRIVE SHAFT TO   │
    │ HORIZONTAL ORIGIN POSITION    │          │ HORIZONTAL ORIGIN POSITION    │
    └───────────────────────────────┘          └───────────────────────────────┘
                    │
      ( END RETURNING TO ORIGIN )
```

*FIG. 13*

START RETURNING TO ORIGIN

S41
START ASCENDING OPERATION OF
FIRST AND SECOND DRIVE SHAFTS

S42
HAS FIRST DRIVE SHAFT REACHED VERTICAL ORIGIN POSITION FIRST?

NO

YES

S43
STOP ASCENDING OPERATION OF
FIRST AND SECOND DRIVE SHAFTS

S44
OPERATE FIRST DRIVE SHAFT
IN FIRST ROTATION DIRECTION

S45
STOP ROTATION OPERATION OF FIRST
DRIVE SHAFT AFTER FIRST DRIVE SHAFT
REACHES HORIZONTAL ORIGIN POSITION

S46
RESUME ASCENDING OPERATION
OF SECOND DRIVE SHAFT

S47
STOP ASCENDING OPERATION OF SECOND
DRIVE SHAFT AFTER SECOND DRIVE SHAFT
REACHES VERTICAL ORIGIN POSITION

S50
STOP ASCENDING OPERATION OF
FIRST AND SECOND DRIVE SHAFTS

S51
ROTATE SECOND DRIVE SHAFT IN DIRECTION
IN WHICH SECOND SUPPORT ARM MOVES
AWAY FROM FIRST SUPPORT ARM

S52
STOP ROTATION OPERATION OF
SECOND DRIVE SHAFT AFTER SECOND
DRIVE SHAFT REACHES ONE END
OR OTHER END OF ROTATION RANGE

S53
RESUME ASCENDING OPERATION
OF FIRST DRIVE SHAFT

S54
STOP ASCENDING OPERATION OF FIRST
DRIVE SHAFT AFTER FIRST DRIVE SHAFT
REACHES VERTICAL ORIGIN POSITION

S55
OPERATE FIRST DRIVE SHAFT
IN FIRST ROTATION DIRECTION

S56
STOP ROTATION OPERATION OF FIRST
DRIVE SHAFT AFTER FIRST DRIVE SHAFT
REACHES HORIZONTAL ORIGIN POSITION

S48
OPERATE SECOND DRIVE SHAFT
IN SECOND ROTATION DIRECTION

S49
STOP ROTATION OPERATION OF SECOND
DRIVE SHAFT AFTER SECOND DRIVE SHAFT
REACHES HORIZONTAL ORIGIN POSITION

END RETURNING TO ORIGIN

36

FIG. 14

FIG. 15

FIG. 16

| 112<br>FIRST VERTICAL<br>DRIVE UNIT | 1b<br><br><br><br><br><br><br><br><br><br><br><br><br>CONTROL<br>UNIT | 131<br>FIRST VERTICAL<br>ORIGIN POSITION<br>DETECTION SENSOR |
|---|---|---|
| 113<br>FIRST ROTATION<br>DRIVE UNIT | | 132<br>FIRST HORIZONTAL<br>ORIGIN POSITION<br>DETECTION SENSOR |
| 118<br>FIRST WEIGHING<br>PUMP | | 134<br>FIRST LIQUID<br>LEVEL<br>DETECTION SENSOR |
| 119<br>FIRST CLEANING<br>PUMP | | 135<br>FIRST PROBE<br>COLLISION<br>DETECTION SENSOR |
| 122<br>SECOND VERTICAL<br>DRIVE UNIT | | 141<br>SECOND VERTICAL<br>ORIGIN POSITION<br>DETECTION SENSOR |
| 123<br>SECOND ROTATION<br>DRIVE UNIT | | 142<br>SECOND HORIZONTAL<br>ORIGIN POSITION<br>DETECTION SENSOR |
| 128<br>SECOND WEIGHING<br>PUMP | | 143<br>CROSS-CHECK<br>SENSOR |
| 129<br>SECOND CLEANING<br>PUMP | | 144<br>SECOND LIQUID<br>LEVEL<br>DETECTION SENSOR |
| | | 145<br>SECOND PROBE<br>COLLISION<br>DETECTION SENSOR |

FIG. 17

*FIG. 18*

START RETURNING TO ORIGIN

ACTIVATE EXCITATION OF FIRST DRIVE SHAFT — S61

ACTIVATE EXCITATION OF SECOND DRIVE SHAFT — S62

START ASCENDING OPERATION OF FIRST AND SECOND DRIVE SHAFTS — S63

S64 — HAS FIRST DRIVE SHAFT REACHED VERTICAL ORIGIN POSITION FIRST? — NO

YES — S65

STOP ASCENDING OPERATION OF FIRST AND SECOND DRIVE SHAFTS AFTER FIRST AND SECOND DRIVE SHAFTS EACH REACH VERTICAL ORIGIN POSITION

S68 — STOP ASCENDING OPERATION OF FIRST AND SECOND DRIVE SHAFTS

S66 — ROTATE FIRST DRIVE SHAFT TO HORIZONTAL ORIGIN POSITION

S69 — DEACTIVATE EXCITATION OF SECOND DRIVE SHAFT

S67 — ROTATE SECOND DRIVE SHAFT TO HORIZONTAL ORIGIN POSITION

S70 — START ASCENDING OPERATION OF FIRST DRIVE SHAFT

END RETURNING TO ORIGIN

S71 — HAS FIRST DRIVE SHAFT REACHED VERTICAL ORIGIN POSITION?

NO

YES — S72

S76 — SECOND DRIVE SHAFT HAS REACHED CROSS-CHECK POSITION

S72 — STOP ASCENDING OPERATION OF FIRST DRIVE SHAFT AND ACTIVATE EXCITATION OF SECOND DRIVE SHAFT

S77 — STOP ASCENDING OPERATION OF FIRST DRIVE SHAFT AND OUTPUT CROSS ARRANGEMENT ERROR

S73 — CAUSE SECOND DRIVE SHAFT TO ASCEND TO VERTICAL ORIGIN POSITION

S74 — ROTATE FIRST DRIVE SHAFT TO HORIZONTAL ORIGIN POSITION

S75 — ROTATE SECOND DRIVE SHAFT TO HORIZONTAL ORIGIN POSITION

END RETURNING TO ORIGIN

40

**REFERENCES CITED IN THE DESCRIPTION**

**Patent documents cited in the description**

- CN 103376331